(19) Europäisches Patentamt
European Patent Office
Office européen des brevets

(11) EP 2 268 491 B1

(12) # FASCICULE DE BREVET EUROPEEN

(45) Date de publication et mention de la délivrance du brevet:
**27.08.2014 Bulletin 2014/35**

(21) Numéro de dépôt: **09721057.9**

(22) Date de dépôt: **09.03.2009**

(51) Int Cl.:
***B60C 1/00*** (2006.01) ***C08K 3/36*** (2006.01)
***C08K 9/02*** (2006.01)

(86) Numéro de dépôt international:
**PCT/EP2009/052736**

(87) Numéro de publication internationale:
**WO 2009/112463 (17.09.2009 Gazette 2009/38)**

(54) **COMPOSITION DE CAOUTCHOUC DIENIQUE POUR PNEUMATIQUE COMPRENANT UNE SILICE EN TANT QUE CHARGE RENFORCANTE**

DIENKAUTSCHUKZUSAMMENSETZUNG FÜR REIFEN MIT SILICIUMDIOXID ALS VERSTÄRKUNGSFÜLLSTOFF

DIENE RUBBER COMPOSITION FOR TYRE INCLUDING A SILICA AS A REINFORCING FILLER

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **10.03.2008 FR 0851524**

(43) Date de publication de la demande:
**05.01.2011 Bulletin 2011/01**

(73) Titulaires:
- **COMPAGNIE GENERALE DES ETABLISSEMENTS MICHELIN**
  **63000 Clermont-Ferrand (FR)**
- **MICHELIN Recherche et Technique S.A.**
  **1763 Granges-Paccot (CH)**

(72) Inventeurs:
- **THOMASSON, Damien**
  **F-63100 Clermont-Ferrand (FR)**
- **ALLAIN, Emmanuelle**
  **F-94240 L'hay les Roses (FR)**
- **HERNANDEZ, Julien**
  **F-92160 Antony (FR)**

(74) Mandataire: **Cohen, Sylvia**
**M.F.P. MICHELIN**
**23, place des Carmes Déchaux**
**SGD/LG/PI - F35 - Ladoux**
**63040 Clermont-Ferrand Cedex 9 (FR)**

(56) Documents cités:
**EP-A- 1 529 802**
**WO-A-03/016387**
**US-A1- 2007 208 127**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention se rapporte aux compositions de caoutchoucs diéniques renforcées d'une charge inorganique, destinées à la fabrication de pneumatiques ou de produits semi-finis pour pneumatiques, en particulier aux bandes de roulement de ces pneumatiques.

Pour obtenir les propriétés de renforcement optimales conférées par une charge dans une bande de roulement de pneumatique et ainsi une haute résistance à l'usure, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

De manière connue, le noir de carbone présente de telles aptitudes, ce qui n'est en général pas le cas des charges inorganiques, en particulier des silices. En effet, pour des raisons d'affinités réciproques, ces particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("processability") plus difficile qu'en présence de noir de carbone.

Depuis que les économies de carburant et la nécessité de protéger l'environnement sont devenues une priorité, il s'est avéré nécessaire de produire des pneumatiques ayant une résistance au roulement réduite sans pénalisation de leur résistance à l'usure.

Ceci a été rendu notamment possible grâce à l'emploi, dans les bandes de roulement de ces pneumatiques, de nouvelles compositions de caoutchouc renforcées de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi qu'une adhérence améliorée sur sol mouillé, enneigé ou verglacé.

Des bandes de roulement chargées de telles silices hautement dispersibles (notées "HD" ou "HDS" pour "highly dispersible" ou "highly dispersible silica"), utilisables dans les pneumatiques à basse résistance au roulement parfois qualifiés de "Pneus Verts" pour l'économie d'énergie offerte à l'usager ("Green Tyre concept"), ont été abondamment décrites. On se reportera notamment aux demandes de brevet EP 501 227, EP 692 492, EP 692 493, EP 735 088, EP 767 206, EP 786 493, EP 881 252, WO99/02590, WO99/02601, WO99/02602, WO99/06480, WO00/05300, WO00/05301.

Ces documents de l'art antérieur enseignent l'utilisation de silices du type HD présentant une surface spécifique BET comprise entre 100 et 250 $m^2/g$. En pratique, une silice HD à haute surface spécifique faisant référence dans le domaine des "Pneus Verts" est en particulier la silice "Zeosil 1165 MP" (surface BET égale à environ 160 $m^2/g$) commercialisée par la société Rhodia. L'utilisation de cette silice "Zeosil 1165 MP" permet d'obtenir de bons compromis en matière de performance pneumatique, notamment une résistance à l'usure et une résistance au roulement satisfaisantes.

L'intérêt d'utiliser une silice à haute surface spécifique réside principalement dans la possibilité d'augmenter le nombre de liaisons de la silice avec l'élastomère et donc d'augmenter le niveau de renforcement de celui-ci. C'est pourquoi il apparaît avantageux d'utiliser dans des compositions de caoutchouc pour bandes de roulement de pneumatiques, des silices à haute surface spécifique, éventuellement supérieure à celle classiquement utilisée de l'ordre de 160 $m^2/g$, pour notamment améliorer la résistance à l'usure de ces bandes de roulement. Néanmoins, la dispersibilité de la charge et l'accroissement de sa surface spécifique sont considérés comme des caractéristiques antinomiques. En effet, une grande surface spécifique suppose une augmentation des interactions entre objets de charge, et donc une mauvaise dispersion de celle-ci dans la matrice élastomère ainsi qu'une mise en oeuvre malaisée.

Les Demanderesses ont mis en évidence dans leur demande de brevet WO 03/016387 qu'une famille de silices hautement dispersibles, dites silices HRS, pouvait avantageusement être utilisée dans des compositions de caoutchouc pour pneumatiques à titre de charge renforçante. Elles ont poursuivi leurs recherches et découvert qu'une nouvelle famille de silices à haute surface spécifique, définies par une distribution granulométrique, une porosité spécifiques et/ou une réactivité de surface particulière qui s'écartent du domaine de définition des silices de la demande de brevet WO 03/016387 permettaient de manière inattendue, d'obtenir un abaissement de l'hystérèse des compositions de caoutchouc les contenant par rapport à contenant des silices classiques de surface spécifique comparable.

Les silices de cette nouvelle famille sont susceptibles d'être obtenues par précipitation selon un procédé de préparation original.

Les Demanderesses ont également mis en évidence que ce nouveau procédé de préparation de silice permet d'obtenir des silices hautement dispersibles, particulièrement intéressantes pour une utilisation comme charge renforçante dans des compositions de caoutchouc pour pneumatiques.

Idéalement, une bande de roulement de pneumatique doit obéir à un grand nombre d'exigences techniques parmi lesquelles une résistance élevée à l'usure et une faible résistance au roulement, une adhérence élevée sur tout type de sols, tout en offrant au pneumatique un bon niveau de comportement routier sur véhicule automobile. Ainsi, dans le domaine du pneumatique, recherche-t-on des compositions de caoutchouc qui confèrent le meilleur compromis possible des performances pneumatiques.

Or, les Demanderesses ont découvert de manière surprenante et inattendue lors de leurs recherches, que l'utilisation à titre de charges renforçantes pour la fabrication de bandes de roulement de pneumatique de ces nouvelles silices, et plus particulièrement celles présentant une haute surface spécifique, permet d'atteindre un excellent et surprenant compromis de performances du pneumatique. Ce compromis est supérieur à celui offert par les silices à haute surface spécifique existantes et classiquement utilisées dans les bandes de roulement des "Pneus Verts" ainsi qu'aux silices HRS, et offre un niveau de renforcement jusqu'ici jamais atteint sur de telles bandes de roulement. Ce compromis s'exprime plus particulièrement par une amélioration très significative de la résistance au roulement et de l'adhérence sur sol mouillé sans nuire pour autant aux autres exigences techniques.

On entend généralement par haute surface spécifique des surfaces d'au moins environ 130 $m^2/g$, voire supérieure à 150 $m^2/g$.

En conséquence, un premier objet de l'invention concerne une composition de caoutchouc diénique pour pneumatique (c'est à dire destinée à la fabrication de pneumatiques ou de produits semi-finis en caoutchouc destinés à la réalisation de ces pneumatiques) à base d'au moins (i) un élastomère diénique, (ii) une charge inorganique renforçante, (iii) un agent de couplage assurant la liaison entre la charge renforçante et l'élastomère, caractérisée en ce que ladite charge inorganique comprend au moins une silice susceptible d'être obtenue selon un procédé particulier.

Ce procédé de préparation de silice précipitée comprend la réaction d'un silicate avec un agent acidifiant ce par quoi l'on obtient une suspension de silice, puis la séparation et le séchage de cette suspension, caractérisé en ce que la réaction du silicate avec l'agent acidifiant est réalisée selon les étapes successives suivantes :

(i) on met en contact (mélange) une suspension aqueuse de silice précipitée, présentant un pH compris entre 2,5 et 5,3, avec de l'agent acidifiant et du silicate, de telle manière que le pH du milieu réactionnel soit maintenu entre 2,5 et 5,3,

(ii) on ajoute dans le milieu réactionnel obtenu du silicate et ce de manière à augmenter le pH du milieu réactionnel jusqu'à une valeur comprise entre 4,7 et 6,3.

Selon un mode de réalisation préféré du procédé de l'invention, la suspension aqueuse de silice précipitée, utilisée dans l'étape (i), est préparée de la manière suivante :

(i) on met en contact (mélange) une suspension aqueuse de silice précipitée, présentant un pH compris entre 2,5 et 5,3, avec de l'agent acidifiant et du silicate, de telle manière que le pH du milieu réactionnel soit maintenu entre 2,5 est 5,3,

(ii) on ajoute dans le milieu réactionnel obtenu un agent alcalin, de préférence du silicate, et ce de manière à augmenter le pH du milieu réactionnel jusqu'à une valeur comprise entre 4,7 et 6,3.

Selon un mode de réalisation préféré du procédé de l'invention, la suspension aqueuse de silice précipitée, utilisée dans l'étape (i), est préparée de la manière suivante :

(1) on forme un pied de cuve initial comportant du silicate et un électrolyte, la concentration en silicate (exprimée en $SiO_2$) dans ledit pied de cuve initial étant inférieure à 100 g/L, en particulier inférieure à 80 g/L, et, de manière préférée, la concentration en électrolyte dans ledit pied de cuve initial étant inférieure à 17g/L, en particulier inférieure à 15 g/L,

(2) on ajoute de l'agent acidifiant audit pied de cuve jusqu'à l'obtention d'une valeur du pH du milieu réactionnel d'au moins environ 7, de préférence comprise entre 7,5 et 8,5,

(3) on ajoute au milieu réactionnel, simultanément, de l'agent acidifiant et du silicate,

(4) on arrête l'addition du silicate tout en continuant l'addition de l'agent acidifiant dans le milieu réactionnel, jusqu'à l'obtention d'une valeur du pH du milieu réactionnel comprise entre 2,5 et 5,3, de préférence entre 2,8 et 4,9.

Il a été ainsi trouvé que l'enchaînement d'étapes spécifiques, au niveau du procédé selon l'invention, et notamment au niveau de son mode de réalisation préféré décrit ci-dessus, constituait une condition importante pour conférer aux produits obtenus leurs caractéristiques et propriétés particulières.

Ces silices sont caractérisées en ce qu'elles sont formées d'agrégats de particules primaires (A) de silice à la surface desquels se trouvent des particules primaires (B) de silice de taille inférieure à celle des particules primaires (A) et en ce qu'elles possèdent :

- une surface spécifique CTAB (SCTAB) comprise entre 60 et 400 m2/g,
- une taille médiane d50 d'agrégats, mesurée par granulométrie XDC après désagglomération aux ultra-sons, telle que :

d50 (nm) > (6214 / SCTAB (m2/g)) + 23,

- une répartition du volume poreux telle que :

V(d5 - d50) / V(d5 - d100) > 0,906 - (0,0013 x SCTAB (m2/g)), et

. une distribution de tailles de pores telle que :

Mode (nm) > (4166 / SCTAB (m2/g)) - 9,2.

Plus particulièrement , de telles silices précipitées sont caractérisées en ce qu'elle présentent un paramètre C, mesuré par diffusion de rayons X aux petits angles (SAXS), tel que : C / SCTAB (m2/g) > 0,001.

L'invention a également pour objet une composition de caoutchouc diénique pour pneumatique (c'est à dire destinée à la fabrication de pneumatiques ou de produits semi-finis en caoutchouc destinés à la réalisation de ces pneumatiques) à base d'au moins (i) un élastomère diénique, (ii) une charge inorganique renforçante, (iii) un agent de couplage assurant la liaison entre la charge renforçante et l'élastomère, caractérisée en ce que ladite charge inorganique comprend au moins une silice formée d'agrégats de particules primaires (A) de silice à la surface desquels se trouvent des particules primaires (B) de silice de taille inférieure à celle des particules primaires (A) et en ce qu'elle possède :

- une surface spécifique CTAB (SCTAB) comprise entre 60 et 400 m2/g,
- une taille médiane d50 d'agrégats, mesurée par granulométrie XDC après désagglomération aux ultra-sons, telle que :

d50 (nm) > (6214 / SCTAB (m2/g)) + 23,

- une répartition du volume poreux telle que :

V(d5 - d50) / V(d5 - d100) > 0,906 - (0,0013 x SCTAB (m2/g)), et

. une distribution de tailles de pores telle que :

Mode (nm) > (4166 / SCTAB (m2/g)) - 9,2.

L'invention a également pour objet l'utilisation d'une composition de caoutchouc diénique conforme à l'invention pour la fabrication de pneumatiques ou de produits semi-finis en caoutchouc destinés à ces pneumatiques, ces produits semi-finis étant notamment choisis dans le groupe constitué par les bandes de roulement, les sous-couches destinées par exemple à être placées sous ces bandes de roulement, les nappes sommet, les flancs, les nappes carcasse, les talons, les protecteurs, les chambres à air et les gommes intérieures étanches pour pneu sans chambre.

La composition pour pneumatique conforme à l'invention est particulièrement adaptée à la fabrication de bandes de roulement de pneumatiques destinés à équiper des véhicules de tourisme, camionnettes, véhicules 4x4 (à 4 roues motrices), deux roues, "Poids lourds" (c'est-à-dire métro, bus, engins de transport routier (camions, tracteurs, remorques), véhicules hors-la-route), avions, engins de génie civil, agraire ou de manutention, ces bandes de roulement pouvant être utilisées lors de la fabrication de pneumatiques neufs ou pour le rechapage de pneumatiques usagés.

L'invention a également pour objet ces pneumatiques et ces produits semi-finis en caoutchouc destinés aux pneumatiques lorsqu'ils comportent une composition de caoutchouc conforme à l'invention, en particulier les bandes de roulement de pneumatiques, ces bandes de roulement présentant de manière surprenante à la fois une résistance au roulement diminuée et une adhérence sur sol mouillé significativement accrue.

La composition de caoutchouc diénique pour pneumatique selon l'invention est susceptible d'être préparée par un procédé constituant un autre objet de la présente invention. Ce procédé comporte les étapes suivantes :

- on incorpore à un élastomère diénique, au cours d'une première étape dite "non-productive" :

  à titre de charge renforçante, une charge inorganique ;
  et un agent de couplage assurant la liaison entre la charge inorganique et l'élastomère diénique ;

- on malaxe thermomécaniquement le tout, en une ou plusieurs fois, jusqu'à atteindre une température maximale comprise entre 110°C et 190°C ;
- on refroidit l'ensemble à une température inférieure à 100°C ;
- on incorpore ensuite, au cours d'une seconde étape dite "productive", un système de réticulation ou vulcanisation;
- on malaxe le tout jusqu'à une température maximale inférieure à 110°C,

ledit procédé étant caractérisé en ce que la charge inorganique est constituée en tout ou partie d'une silice obtenue selon le procédé décrit plus haut et/ou présentant les caractéristiques telles que définies plus haut.
La silice obtenue selon le procédé décrit plus haut ou présentant les caractéristiques telles que définies plus haut, est utilisée à titre de charge renforçante dans une composition de caoutchouc diénique pour pneumatique (c'est à dire destinée à la fabrication de pneumatiques ou de produits semi-finis en caoutchouc destinés à la réalisation de ces pneumatiques).
C'est pourquoi l'invention a également pour objet un procédé pour renforcer une composition de caoutchouc diénique destiné à la fabrication de pneumatiques, caractérisé en ce qu'on incorpore à cette composition à l'état cru, par malaxage thermomécanique, une silice renforçante obtenue selon le procédé décrit plus haut et/ou présentant les caractéristiques telles que définies plus haut.
L'invention ainsi que ses avantages seront aisément compris à la lumière de la description et des exemples de réalisation qui suivent.

## I MESURES ET TESTS UTILISES

### I.1 Caractérisation des silices

Les silices sont caractérisées comme indiqué ci-après.

#### I.1.1 Surface spécifique

Dans l'exposé qui suit, la surface spécifique CTAB est la surface externe, qui peut être déterminée selon la méthode décrite ci-dessous dérivée de la norme NF ISO 5794-1 (février 2006, 2$^{ème}$ tirage 2006-03).

*Principe*

La silice est mise en contact avec une solution de bromure de cétyltriméthyl ammonium (ou hexadécyltriméthylammonium), appelé communément CTAB, sous agitation magnétique. La couche de CTAB adsorbé est proportionnelle à la surface spécifique de la silice.
La silice et la solution de CTAB résiduel sont séparées. Le titrage de l'excès de CTAB est effectué par une solution de di(2-éthylhexyl)sulfosuccinate de sodium, appelé communément OT, jusqu'à un point de turbidité maximale.
La surface externe d'une silice peut se déterminer par la quantité de CTAB qu'elle est capable d'adsorber, exprimée en $m^2/g$, sur produit séché pendant 2 heures à 105 °C.

*Matériel et équipement*

*- Matériel*

Filtres pour seringues 0,45 μm
Flacons
Fiole jaugée de 5000 mL.
Barreaux aimantés

Seringues de 10 mL

*- Equipement*

Balance avec une précision à 0,1 mg près
Agitateurs magnétiques
Titrateur automatique équipé i) d'un détecteur photoélectrique ou d'un photomètre mesurant le facteur de transmission de la lumière à la longueur d'onde de 550 nm, et ii) d'une burette, par exemple un titrateur Mettler DL 21 avec phototrode 550 nm

Mode opératoire

Durant toute la durée d'analyse, tous les appareils et toutes les solutions doivent être à une température comprise entre 23 et 27 °C, afin d'éviter un début de cristallisation, le CTAB cristallisant à 20 °C.

*- Réactifs*

Solution de CTAB de concentration (Co) de 11 g/L, tamponnée à pH 9,6 :

Dans une fiole jaugée de 5 litres, contenant environ 1 litre d'eau permutée, on pèse/introduit :

- 5,426 g d'acide borique,
- 6,489 g de chlorure de potassium et
- 64,5 $cm^3$ de soude 1 mol/L à la burette.

Puis on homogénéise le mélange.
On rajoute 55 g ± 0,001 g de CTAB et environ 3 litres d'eau permutée.
On homogénéise jusqu'à complète dissolution du CTAB et on ajuste à 5 litres avec de l'eau permutée.
Solution d'aérosol OT (di(2-éthylhexyl)sulfosuccinate de sodium) :

On pèse environ 1,85 g ± 0,01 g d'aérosol et on les dissout dans une fiole jaugée d'un litre avec de l'eau permutée (on chauffe légèrement pour accélérer la dissolution sous agitation magnétique).

La solution obtenue est laissée au repos pendant 12 jours avant utilisation.

*- Méthode d'analyse*

. Préparation de la suspension

On pèse dans un flacon TP 50/100 environ exactement :

1,60 g ± 0,05 g de silice pour une surface spécifique attendue inférieure à 130 $m^2$/g, 0,90 g ± 0,05 g de silice pour une surface spécifique attendue comprise entre 130 et 180 $m^2$/g,
0,66 g ± 0,05 g de silice pour une surface spécifique attendue supérieure à 180 $m^2$/g.

On ajoute ensuite à cette masse M de silice 90 mL (Vo) de solution de CTAB.

. Adsorption

On introduit un barreau aimanté, de longueur égale à 35 mm (par exemple barreau aimanté dit "double extrémité"), dans le flacon qui est alors mis en agitation à l'aide d'agitateurs magnétiques (temps de séjour de 40 minutes, vitesse d'agitation de 600 trs/min).

. Filtration

A l'aide d'une seringue, on prélève de la suspension. Puis, après avoir équipé la seringue d'un filtre 0,45 µm,

on filtre la suspenion et on récupère environ 10 mL de solution filtrée dans un flacon.

. Mesures

On prépare le titrateur automatique conformémemnt aux instructions du fabricant. On choisit les paramètres de titrage de manière à obtenir une introduction rapide de solution d'aérosol OT au début du titrage et vun ralentissement en fonction de la pente de la courbe de titrage au voisinage du point final.

- Titrage à blanc

Un premier titrage ou titrage à blanc (titrage 1) est préalablement effectué quotidiennement, avant le titrage de l'échantillon, sur la solution de CTAB de départ, c'est-à-dire avant mélange avec la silice.
On pèse environ exactement 5 g de solution de CTAB de départ, puis on les introduit dans un flacon.
On y ajoute 54 mL d'eau permutée.
On procède au titrage (titrage 1).
Pour cela, on place le flacon dans le titrateur automatique et on règle la vitesse de l'agitateur de manière à pouvoir effectuer le mélange sans produire de mousse.
Puis on commence le titrage qui prend fin automatiquement une fois que le point de turbidité maximale est atteint.
Chaque titrage est effectué en double.
V1 est le volume (en mL) de solution d'aérosol OT obtenu pour le titrage de la masse M1 (en g) de la solution de CTAB de départ utilisée pour ce titrage.

- Titrage de l'échantillon

On pèse environ exactement 5 g de solution récupérée après la filtration, puis on les introduit dans un flacon.
On y ajoute 54 mL d'eau permutée.
On procède au titrage (titrage 2).
Pour cela, on place le flacon dans le titrateur automatique et on règle la vitesse de l'agitateur de manière à pouvoir effectuer le mélange sans produire de mousse.
Puis on commence le titrage qui prend fin automatiquement une fois que le point de turbidité maximale est atteint.
Chaque titrage est effectué en double.
V2 est le volume (en mL) de solution d'aérosol OT obtenu pour le titrage de la masse M2 (en g) de la solution de CTAB récupérée après la filtration et utilisée pour ce titrage.

- Calcul

La surface CTAB (en $m^2/g$) est égale à :

$$578,4 \times (Vo/M) \times (100/(100 - Hum)) \times (Co/1000) \times [((V1/M1) - (V2/M2))/(V1/M1)]$$ avec :

Vo : volume (en mL) de solution de CTAB de départ (90 mL) ajoutée à la silice pour préparer la suspension en vue du titrage,
M : masse (en g) de silice à laquelle est ajoutée la solution de CTAB de départ pour préparer la suspension en vue du titrage,
Hum : humidité (ou teneur en eau résiduelle) de la silice mesurée après traitement thermique à 105 °C pendant 2 heures (en nombre de %)
Co : concentration initiale (en g/L) de la solution de CTAB (11 g/L)
M1 : masse (en g) de la solution de CTAB de départ utilisée pour le titrage 1, c'est-à-dire avant mélange avec la silice
V1 : volume (en mL) de solution d'aérosol OT obtenu pour le titrage de M1 (titrage 1)
M2 : masse (en g) de la solution de CTAB utilisée pour le titrage 2, c'est-à-dire après mélange avec la silice et adsorption sur la silice
V2 : volume (en mL) de solution d'aérosol OT obtenu pour le titrage de M2 (titrage 2) 578,4 correspond à la surface (en $m^2$) occupée par 1 gramme de CTAB.

La surface spécifique BET est déterminée selon une méthode découlant de la méthode de BRUNAUER - EMMET - TELLER décrite dans "The journal of the American Chemical Society", Vol. 60, page 309, février 1938 et correspondant à la norme NF ISO 9277 (décembre 1996).

I.1.2 Mesure de pH

Le pH est mesuré selon la méthode suivante dérivant de la norme ISO 787/9 (pH d'une suspension à 5 % dans l'eau) :

*Appareillage :*

- pHmètre étalonné (précision de lecture au 1/100$^{e}$)
- életrode de verre combinée
- bécher de 200 mL
- éprouvette de 100 mL
- balance de précision à 0,01 g près.

*Mode opératoire :*

5 g de silice sont pesés à 0,01 g près dans le bécher de 200 mL. 95 mL d'eau mesurés à partir de l'éprouvette graduée sont ensuite ajoutés à la poudre de silice. La suspension ainsi obtenue est agitée énergiquement (agitation magnétique) pendant 10 minutes. La mesure du pH est alors effectué.

I.1.3 Taille médiane d'agrégats

La taille médiane d'agrégats, notée d50, est mesurée à l'aide de la méthode d'analyse granulométrique XDC par sédimentation centrifuge selon le mode opératoire qui suit.

*Matériel nécessaire*

- granulomètre à sédimentation centrifuge BI-XDC (BROOKHAVEN-INSTRUMENT X DISC CENTRIFUGE) commercialisé par la société Brookhaven Instrument Corporation)
- bécher forme haute de 50 ml
- éprouvette graduée de 50 ml
- sonde à ultra-sons BRANSON 1500 watts, sans embout, de diamètre de 13 mm,
- eau permutée
- cristallisoir rempli de glace
- agitateur magnétique

*Conditions de mesure*

- version Windows 3.54 du logiciel (fournie par le fabricant du granulomètre)
- mode fixe
- vitesse de rotation : 5000 tr/min
- durée de l'analyse : 120 minutes
- densité (silice) : 2,1
- volume de la suspension à prélever : 15 ml

*Préparation de l'échantillon*

Ajouter dans le bécher forme haute 3,2 g de silice et 40 ml d'eau permutée.
Mettre le bécher contenant la suspension dans le cristallisoir rempli de glace.
Plonger la sonde à ultra-sons dans le bécher.
Désagglomérer la suspension pendant 8 minutes à l'aide de la sonde BRANSON de 1500 watts (utilisée à 60 % de la puissance maximale).
Lorsque la désagglomération est terminée, mettre le bécher sur un agitateur magnétique. Refroidir la dispersion

obtenue à la température ambiante (21 °C)

*Préparation du granulomètre*

Allumer l'appareil et laisser chauffer pendant au moins 30 minutes.
Rincer 2 fois le disque à l'eau permutée.
Introduire dans le disque 15 ml de l'échantillon à analyser et mettre en agitation.
Entrer dans le logiciel les conditions de mesure mentionnées ci-dessus.
Faire les mesures.
Lorsque les mesures ont été effectuées :

Arrêter la rotation du disque.
Rincer plusieurs fois le disque à l'eau permutée.
Arrêter l'appareil.

*Résultats*

Dans le registre d'appareil, relever les valeurs du diamètre passant à 50 % (% massique) ou taille médiane (taille pour laquelle on a 50 % en masse des agrégats de taille inférieure à cette taille) et éventuellement la valeur du Mode (la dérivée de la courbe granulométrique cumulée donne une courbe de fréquence dont l'abscisse du maximum (abscisse de la population principale) est appelé le Mode).

I.1.4 Chimie de surface

Le nombre de silanols par nm2 est déterminé par greffage de méthanol sur la surface de la silice. Dans un premier temps, une quantité d'environ 1 g de silice brute est mise en suspension dans 10 ml de méthanol, dans un autoclave de 110 ml (Top Industrie, Réf : 09990009).
Un barreau aimanté est introduit et le réacteur, fermé hermétiquement et calorifugé, est chauffé à 200°C (40 bars) sur agitateur magnétique chauffant pendant 4 heures. L'autoclave est ensuite refroidi dans un bain d'eau froide. La silice greffée est récupérée par décantation et le méthanol résiduel évaporé sous courant d'azote. Enfin, la silice greffée est séchée à 130°C sous vide pendant 12 heures. La teneur en carbone est déterminée par analyseur élémentaire (analyseur NCS 2500 de CE Instruments) sur la silice brute et sur la silice greffée. Ce dosage de carbone sur la silice greffée doit être effectué dans les 3 jours qui suivent la fin du séchage. En effet, l'humidité de l'air ou la chaleur pourraient provoquer une hydrolyse du greffage méthanol. Le nombre de silanols par nm2 est calculé à l'aide de la formule suivante :

$$N_{SiOH/nm^2} = \frac{(\%C_g - \%C_b) \times 6.023 \times 10^{23}}{S_{spé} \times 10^{18} \times 12 \times 100}$$

$N_{SiOH/nm^2}$: nombre de silanols par $nm^2$ ($SiOH/nm^2$)
%Cg : pourcentage massique de carbone présent sur la silice greffée
%Cb : pourcentage massique de carbone présent sur la silice brute
Sspé. : surface spécifique BET de la silice ($m^2/g$)

I.1.5 Volumes poreux

Les volumes poreux et diamètres/rayons de pores donnés sont mesurés par porosimétrie au mercure (Hg), à l'aide d'un porosimètre MICROMERITICS Autopore IV 9520, et sont calculés par la relation de WASHBURN avec un angle de contact théta égal à 140° et une tension superficielle gamma égale à 485 Dynes/cm ; la préparation de chaque échantillon se fait comme suit : chaque échantillon est préalablement séché pendant 2 heures en étuve à 200 °C..
$V_{(d5 - d50)}$ représente le volume poreux constitué par les pores de diamètres compris entre d5 et d50, et $V_{(d5 - d100)}$ représente le volume poreux constitué par les pores de diamètres compris entre d5 et d100, dn étant ici le diamètre de pores pour lequel n % de la surface totale de tous les pores est apporté par les pores de diamètre supérieur à ce diamètre (la surface totale des pores (S0) peut être déterminée à partir de la courbe d'intrusion de mercure).
La dérivée de la courbe cumulée (volume poreux cumulé (ml/g) en fonction du rayon de pores (nm), figure 1) donne une courbe de fréquence dont l'abscisse du maximum (abscisse de la population principale) pour des pores de

rayons inférieurs à 100 nm est appelée le Mode (en nm).

I.1.6 Diamètre médian

L'aptitude à la dispersion (et à la désagglomération) des silices selon l'invention peut être quantifiée au moyen de tests spécifiques de désagglomération.

L'un des tests de désagglomération est décrit ci-dessous :

1) Principe :

La cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns).

2) Matériel :

- MALVERN MASTERSIZER 2000, équipé du module standard hydroG.
- Balance de précision donnant 0,1 mg (par exemple METTLER AE260).
- Eau permutée.
- Sonificateur BIOBLOCK (VIBRACELL 75043) de 750 watts (équipé d'un embout de 13 mm de diamètre), utilisé à 80 % de sa puissance nominale.
- Bécher de 50 mL (forme haute).
- Eprouvette graduée de 50 mL.
- Cristallisoir + glace.

3) Conditions de mesure :

Les conditions complètes d'analyse sont gérées manuellement en réglant :

- les paramètres de l'échantillonneur
  débit de pompe : 1600 tr/min
  vitesse agitateur : 600 tr/min
- les paramètres de mesure :

    durée de mesure échantillon : 10 secondes
    durée de mesure bruit de fond : 10 secondes
    nombre de mesures : 3

- les propriétés optiques :

    modèle optique : théorie de Fraunhofer
    analyse standard, sensibilité normale

4) Opérations à effectuer :

i) Préparation de l'échantillon

- Dans le bécher posé sur le plateau de la balance, peser environ 2 g de l'échantillon à analyser,
- Ajouter 50 mL d'eau permutée à l'aide de l'éprouvette graduée,
- Mettre le bécher contenant la suspension de silice dans le cristallisoir contenant de la glace,
- Plonger la sonde à ultra-sons dans cette suspension en ne laissant que 1 cm entre l'extrémité de la sonde et le fond du bécher;
- Désagglomérer pendant 5 minutes et 30 secondes.

ii) Préparation du granulomètre

Dans le logiciel, procéder de la manière suivante :

- activer un fichier dans lequel seront enregistrées les mesures (lecteur A par exemple)
- ouvrir « mesurer » - « manuel »
- ouvrir « option » - nom de la particule : Fraunhofer - dispersant : eau (voir paragrahe 3 propriétés optiques)
- ouvrir « préparateur » - lancer un cycle de nettoyage
- lorsque le nettoyage est terminé, ajuster les paramètres de l'agitateur et du débit de pompe comme indiqué dans le paragraphe 3
- activer démarrer.

Lorsque les mesures de bruit de fond et alignement sont terminées, introduire une partie aliquote de la suspension de silice désagglomérée dans la cuve de façon à obtenir une obscuration correcte et poursuivre le cycle d'analyse.
Lorsque l'analyse est terminée, lancer un cycle de nettoyage.
Lorsque le nettoyage est terminé, mettre à zéro le débit de pompe et la vitesse d'agitation.
La valeur du diamètre médian $D_{50M}$ (ou diamètre médian Malvern) que l'on obtient est d'autant plus faible que la silice présente une aptitude à la désagglomération élevée.

<u>I.1.7 Vitesse de désagglomération $\alpha$</u>

La vitesse de désagglomération notée $\alpha$ est mesurée au moyen d'un test de désagglomération aux ultrasons, à 100% de puissance d'une sonde de 600 W (watts), fonctionnant en mode continu. Ce test connu, faisant notamment l'objet de la demande de brevet WO99/28376 (voir également WO99/28380, WO00/73372, WO00/73373), permet de mesurer en continu l'évolution de la taille moyenne (en volume) des agglomérats de particules durant une sonification, selon les indications ci-après.
Le montage utilisé est constitué d'un granulomètre laser (type "Mastersizer S", commercialisé par Malvern Instruments - source laser He-Ne émettant dans le rouge, longueur d'onde 632,8 nm) et de son préparateur ("Malvem Small Sample Unit MSX1"), entre lesquels a été intercalée une cellule de traitement en flux continu (Bioblock M72410) munie d'une sonde ultrasons (Sonificateur 1/2 pouce type Vibracell de 600 W commercialisé par la société Bioblock).
Une faible quantité (150 mg) de silice à analyser est introduite dans le préparateur avec 160 ml d'eau, la vitesse de circulation étant fixée à son maximum. Au moins trois mesures consécutives sont réalisées pour déterminer selon la méthode de calcul connue de Fraunhofer (matrice de calcul Malvern 3$$D) le diamètre initial moyen (en volume) des agglomérats, noté dv[0]. La sonification (mode continu) est ensuite établie à une puissance de 100% (soit 100% de la position maxi du "tip amplitude") et on suit durant 8 minutes environ l'évolution du diamètre moyen en volume dv[t] en fonction du temps "t" à raison d'une mesure toutes les 10 secondes environ. Après une période d'induction (environ 3-4 minutes), il est observé que l'inverse du diamètre moyen en volume 1/dv[t] varie linéairement, ou de manière sensiblement linéaire, avec le temps "t" (régime stable de désagglomération). La vitesse de dés agglomération $\alpha$ est calculée par régression linéaire de la courbe d'évolution de 1/dv[t] en fonction du temps "t", dans la zone de régime stable de désagglomération (en général, entre 4 et 8 minutes environ). Elle est exprimée en $\mu$m-1/min.
La demande WO99/28376 précitée décrit en détail un dispositif de mesure utilisable pour la réalisation de ce test de désagglomération aux ultrasons. Ce dispositif, on le rappelle, consiste en un circuit fermé dans lequel peut circuler un flux d'agglomérats de particules en suspension dans un liquide. Ce dispositif comporte essentiellement un préparateur d'échantillon, un granulomètre laser et une cellule de traitement. Une mise à la pression atmosphérique, au niveau du préparateur d'échantillon et de la cellule de traitement elle-même, permet l'élimination en continu des bulles d'air qui se forment durant la sonification (action de la sonde ultrasons).
Le préparateur d'échantillon ("Malvern Small Sample Unit MSX1") est destiné à recevoir l'échantillon de silice à tester (en suspension dans le liquide) et à le faire circuler à travers le circuit à la vitesse préréglée (potentiomètre - vitesse maximum d'environ 3 l/min), sous la forme d'un flux de suspension liquide. Ce préparateur consiste simplement en une cuve de réception qui contient, et à travers laquelle circule, la suspension à analyser. Il est équipé d'un moteur d'agitation, à vitesse modulable, afin d'éviter une sédimentation des agglomérats de particules de la suspension ; une mini-pompe centrifuge est destinée à assurer la circulation de la suspension dans le circuit ; l'entrée du préparateur est reliée à l'air libre via une ouverture destinée à recevoir l'échantillon de charge à tester et/ou le liquide utilisé pour la suspension.
Au préparateur est connecté un granulomètre laser ("Mastersizer S") dont la fonction est de mesurer en continu, à intervalles de temps réguliers, la taille moyenne en volume "dv" des agglomérats, au passage du flux, grâce à une cellule de mesure à laquelle sont couplés les moyens d'enregistrement et de calcul automatiques du granulomètre. On rappelle ici brièvement que les granulomètres laser exploitent, de manière connue, le principe de la diffraction de la

lumière par des objets solides mis en suspension dans un milieu dont l'indice de réfraction est différent de celui du solide. Selon la théorie de Fraunhofer, il existe une relation entre la taille de l'objet et l'angle de diffraction de la lumière (plus l'objet est petit et plus l'angle de diffraction sera élevé). Pratiquement, il suffit de mesurer la quantité de lumière diffractée pour différents angles de diffraction pour pouvoir déterminer la distribution de taille (en volume) de l'échantillon, dv correspondant à la taille moyenne en volume de cette distribution (dv = Σ(ni di4) / Σ(ni di3) avec ni nombre d'objets de la classe de taille ou diamètre di).

Intercalée entre le préparateur et le granulomètre laser se trouve enfin une cellule de traitement équipée d'une sonde ultrasons, pouvant fonctionner en mode continu, destinée à casser en continu les agglomérats de particules au passage du flux. Ce flux est thermostaté par l'intermédiaire d'un circuit de refroidissement disposé, au niveau de la cellule, dans une double enveloppe entourant la sonde, la température étant contrôlée par exemple par une sonde de température plongeant dans le liquide au niveau du préparateur.

<u>1.1.8 Morphologie de la silice par MET</u>

La morphologie de la silice, la présence de particules primaires de tailles différentes et la taille (le diamètre) desdites particules primaires sont illustrées/mesurées par Microscopie Electronique à Transmission (MET) comme suit.

1) Principe de la méthode:

La microscopie électronique à transmission (MET) est utilisée dans son mode imagerie, à des grandissements allant jusqu'à 400000, qui sont appropriés pour caractériser les particules primaires de silice.

L'objectif de la caractérisation par MET des silices selon l'invention est de donner accès à des répartitions granulométriques, pondérées par le nombre, des particules primaires de silice.

Les clichés obtenus par la technique MET ne permettant pas nécessairement de dissocier les différentes particules primaires par analyse d'image, c'est au microscopiste de les identifier ; le critère utilisé pour cela est la proportion de la circonférence qui est reconnaissable. Il peut se produire que dans certaines régions des agrégats, il soit impossible d'identifier des particules primaires (par exemple en cas de surépaisseurs locales de matière, ou bien si les particules sont trop interpénétrées pour que la notion de particule primaire ait un sens). Cela n'est cependant pas un obstacle à l'identification d'un nombre de particules primaires suffisamment grand pour obtenir des valeurs significatives.

Le principe de la méthode est donc d'identifier un nombre suffisamment élevé de particules primaires et d'analyser leurs dimensions.

Les particules primaires de la silice selon l'invention sont assimilables à des sphères ; l'analyse des dimensions se fait à partir du cliché MET ; elle consiste, pour chaque particule primaire identifiée, à superposer un cercle qui reproduit correctement la circonférence de la particule, et à mesurer son diamètre. Cette opération est répétée sur un nombre suffisamment élevé de particules primaires, afin d'établir une répartition granulométrique de ces particules primaires, pondérée par le nombre. Cette répartition est une répartition différentielle. On en déduit une répartition granulométrique cumulée des particules primaires. Le descripteur choisi pour exploiter ces dimensions est déduit de la répartition granulométrique cumulée. Il s'agit du diamètre médian en nombre d50%. C'est le diamètre tel que 50 % des particules primaires comptées ont un diamètre inférieur à cette valeur, et 50 % des particules primaires comptées ont un diamètre supérieur à cette valeur.

Comme décrit ci-après, la silice selon l'invention est formée de deux familles de particules primaires de silice, dont les diamètres sont différents et qui sont facilement discernables sur les clichés obtenus par la technique MET. Pour une silice donnée, les opérations d'identification et de comptage des particules primaires sont donc conduites à deux reprises, une première fois pour les petites particules primaires et une deuxième fois pour les grosses particules primaires ; ces deux opérations sont conduites séparément, et les résultats obtenus sont représentés par deux répartitions granulométriques pondérées par le nombre, qui ne sont liées en aucune façon. Compte tenu des différences importantes de diamètre entre les petites particules primaires et les grosses particules primaires, il est nécessaire de procéder à deux acquisitions de clichés séparées, à deux grandissements différents ; des valeurs de grandissement usuelles sont 150000 à 250000 pour l'analyse granulométrique des grosses particules primaires, et 400000 pour l'analyse granulométrique des petites particules primaires. Ces valeurs peuvent varier en fonction des dimensions des particules.

2) Mode opératoire:

Le matériel nécessaire est le suivant :

a) Microscope électronique à transmission donnant accès à des grandissements allant au moins jusqu'à 400000. La tension d'accélération sera choisie de préférence égale à 120 kV.

b) Grilles pour observation MET. Une possibilité est de préparer des grilles 200 mesh en cuivre selon le mode opératoire suivant :

- préparation d'une solution de Collodion (nitrocellulose) à 0,2 % en polymère dans l'acétate d'isoamyle,
- remplissage d'un cristallisoir par de l'eau permutée, et disposition des grilles MET à l'intérieur,
- dépôt de quelques gouttes de la solution de collodion à la surface de l'eau,
- évaporation du solvant de façon à élaborer un film de collodion à la surface de l'eau,
- soutirage de façon à déposer le film de collodion à la surface des grilles,
- dépôt sous vide d'un grain de carbone de taille comprise entre 2 et 3 nm au moyen d'un métalliseur carbone,
- hydrophilisation de la surface de collodion carbonée, par un plasma d'air généré sous haute tension et sous vide contrôlé, au moyen d'un hydrophilisateur.

Après cette opération, la surface ne reste hydrophile que pendant 30 minutes environ ; il est donc préférable de ne réaliser cette opération qu'au dernier moment, une fois la suspension de silice prête.

Au préalable, le microscope électronique à transmission doit être correctement aligné suivant la procédure fournie par son constructeur. En outre il doit faire l'objet d'une vérification de bon fonctionnement portant sur son grandissement. On utilise à cet effet un étalon ou un matériau de référence certifié, tel que les grandissements 150000 et 400000 soient inclus dans l'intervalle des valeurs de grandissement retenu pour la vérification. L'écart constaté entre les valeurs de distances mesurées et les valeurs de distances fournies sur le certificat de l'étalon ou du matériau de référence doit être au maximum égal à 10 %.

Le mode opératoire se décompose comme suit :

i) Préparation d'une suspension de silice désagglomérée aux ultra-sons selon le protocole donné pour la préparation de l'échantillon dans la méthode d'analyse granulométrique XDC par sédimentation centrifuge décrite plus haut.

ii) Dilution d'un facteur 50 de cette suspension dans l'eau permutée.

iii) Dépôt de quelques microlitres de cette suspension sur une grille MET hydrophilisée (moins de 5 $\mu$L).

iv) Une fois la grille sèche, la placer sur le porte-objet.

v) Introduire le porte-objet dans le microscope et procéder aux réglages usuels (en particulier eucentricité et astigmatisme objectif).

vi) La silice étant très sensible au rayonnement électronique, l'acquisition des clichés doit se faire sur des champs n'ayant jamais été exposés aux électrons, et dans des conditions telles que l'exposition du champ observé aux électrons soit la plus courte possible, temps de pose inclus (< 5 secondes). Si nécessaire on utilise un mode d'exposition "Low-Dose" ou un équivalent. On doit attacher une grande importance à l'observation de détail du champ observé, afin d'être certain que les dégâts d'irradiation soient négligeables. Si malgré toutes ces précautions, des dégâts irréversibles apparaissent sur l'échantillon, il sera nécessaire d'envisager l'observation à froid au moyen d'un porte-objet refroidi à la température de l'azote liquide.

vii) On réalise au moins une dizaine de clichés au grandissement 150000 et une dizaine de clichés au grandissement 400000, l'objectif étant d'être assuré de compter au moins 200 petites particules primaires et 200 grosses particules primaires. L'aire de grille utilisée effectivement pour l'identification et le comptage des particules doit être au minimum de 0,5 $\mu m^2$ pour les petites particules primaires et de 3,0 $\mu m^2$ pour les grosses particules primaires.

viii) On considère par la suite que les petites particules primaires sont les particules inscrites dans un cercle de diamètre inférieur strictement à 10 nm, et que les grosses particules primaires sont les particules inscrites dans un cercle de diamètre supérieur ou égal à 10 nm.

ix) Comme énoncé ci-dessus, on procède séparément à la détermination de la répartition granulométrique des petites particules primaires, et à la détermination de la répartition granulométrique des grosses particules primaires, ces deux répartitions étant pondérées par le nombre. Les objets identifiés comme étant des particules primaires sont assimilés à des sphères, et le cercle qui est considéré pour caractériser chaque particule est le cercle dans lequel la particule en question est inscrite. Cette opération peut se faire à l'aide d'un logiciel tel que par exemple ImageJ, Adobe Photoshop ou Analysis.

20 classes granulométriques sont définies entre 0 et 10 nm pour les petites particules primaires, de façon linéaire (c'est-à-dire classes de largeur 0,5 nm) ; 20 classes granulométriques sont définies au dessus de 10 nm pour les grosses particules primaires, de façon linéaire, et de manière à représenter toutes les grosses particules primaires identifiées.

L'identification des particules primaires est basée sur la portion de leur périphérie qui est reconnaissable. Dans le cas des grosses particules primaires, on considère que le tiers environ de la circonférence doit au minimum être reconnaissable pour valider l'identification. C'est le cas pour les particules situées en périphérie de l'agrégat, ou bien pour les particules présentant une différence de contraste suffisante avec le reste de l'agrégat.

Dans le cas des petites particules primaires, on considère que la moitié environ de la circonférence doit au minimum être reconnaissable pour valider l'identification. Cela s'observe en périphérie des agrégats, sur les petites particules visibles à la surface des grosses particules primaires, ou bien dans des zones de l'agrégat de faible épaisseur, pour des petites particules présentant une différence de contraste suffisante avec le reste de l'agrégat.

x) Pour chaque type de particule primaire, grosse ou petite, la répartition granulométrique différentielle en nombre est déterminée, et à partir de cette répartition différentielle, la répartition granulométrique cumulée est déterminée. Cette dernière opération peut se faire à l'aide d'un logiciel tel que par exemple Microsoft Excel. A partir de chaque répartition granulométrique cumulée, on détermine le diamètre médian en nombre D50%, exprimé en nanomètres.

xi) Une fois ces deux répartitions granulométriques déterminées, il est nécessaire de vérifier que cette démarche de caractérisation par MET est bien adaptée à la silice étudiée, en considérant pour chacune des deux familles de particules l'enveloppe de la répartition granulométrique différentielle. Cette enveloppe doit présenter un maximum dans la région 0 à 10 nm pour la famille des petites particules primaires, et elle doit présenter un maximum au-dessus de 10 nm pour la famille des grosses particules primaires. Ceci valide l'existence de deux familles de particules distinctes par leurs dimensions.

I.1.9 Morphologie de la silice par méthode de SAXS

La morphologie de la silice et la présence de particules primaires de tailles différentes peuvent être également illustrées par diffusion de rayons X aux petits angles (en anglais SAXS (*Small Angle X ray Scattering*)) comme suit.

1) *Principe de la méthode* :

La diffusion de rayons X aux petits angles (SAXS) consiste à exploiter la déviation d'un faisceau de rayons X incident, de longueur d'onde $\lambda$, traversant l'échantillon, dans un cône de quelques degrés d'angle. A un angle de diffusion $\theta$ correspond un vecteur d'onde défini par la relation suivante :

$$q=\frac{4\pi}{\lambda}\sin\frac{\theta}{2}$$

dont l'unité est l' $Å^{-1}$.

A chaque angle de diffusion correspond un vecteur d'onde q défini dans l'espace réciproque. Ce vecteur d'onde correspond à une échelle spatiale définie dans l'espace réel, et qui équivaut à $2\pi/q$. La diffusion aux petits angles caractérise donc les grandes distances dans l'échantillon, et inversement la diffusion aux grands angles caractérise les petites distances dans l'échantillon. La technique est sensible à la façon dont la matière est distribuée dans l'espace.

Des références de base sur cette technique sont données ci-dessous :

[1] Small Angle Scattering of X rays, Guinier A., Fournet G., (1955), Wiley, New York.
[2] Small Angle X Ray Scattering , Glatter O., Krattky O., (1982), Academic Press, New York.
[3] Analysis of the Small-Angle Intensity Scattered by a Porous and Granular Medium, Spalla O., Lyonnard S., Testard F., J. Appl. Cryst. (2003), 36, 338-347.

La configuration requise pour caractériser des silices par SAXS selon le critère défini ci-après est la suivante :

- montage SAXS travaillant dans une géométrie de transmission (c'est-à-dire le faisceau incident traversant l'échantillon), avec une longueur d'onde incidente comprise entre 0,5 et 2 Angströms (Å),
- intervalle de vecteur d'onde q compris entre 0,015 $Å^{-1}$ et 0,30 $Å^{-1}$, ce qui permet de caractériser des distances dans l'espace réel allant de 420 à 20 Â,

- montage vérifié en échelle de q à l'aide d'un étalon convenable (par exemple béhénate d'argent, octadécanol ou tout autre composé donnant une raie SAXS fine comprise dans l'intervalle de q ci-dessus),
- détecteur linéaire unidimensionnel ou de préférence bidimensionnel,
- le montage doit permettre de mesurer la transmission de la préparation, c'est-à-dire le rapport entre l'intensité transmise par l'échantillon et l'intensité incidente.

Un tel montage peut être par exemple un montage de laboratoire, fonctionnant sur une source de type tube à rayons X ou bien anode tournante, utilisant de préférence l'émission $k_{\alpha}$. du cuivre à 1,54 Å. Le détecteur peut être une plaque image ou de préférence un détecteur à gaz. Il peut aussi s'agir d'un montage SAXS sur synchrotron.

2) *Mode opératoire* :

L'échantillon de silice est analysé sous forme solide pulvérulente. La poudre est placée entre deux fenêtres transparentes aux rayons X. Indépendamment de cette préparation, on réalise une cellule vide avec uniquement deux fenêtres transparentes, sans silice à l'intérieur. La diffusion par la cellule vide doit être enregistrée séparément de la diffusion par la silice. Lors de cette opération, dite "mesure du background", l'intensité diffusée provient de toutes les contributions extérieures à la silice, telles que le bruit de fond électronique, la diffusion par les fenêtres transparentes, la divergence résiduelle du faisceau incident.
Ces fenêtres transparentes doivent apporter un bruit de fond faible devant l'intensité diffusée par la silice sur l'intervalle de vecteur d'onde exploré. Elles peuvent être constituées de mica, de film de Kapton, ou préférentiellement de film de Kapton adhésif.
Préalablement à l'acquisition SAXS proprement dite sur la silice, il convient de vérifier la qualité de la préparation au moyen de la mesure de transmission de la cellule chargée de silice.
Les étapes à franchir sont donc les suivantes:

i) Elaboration d'une cellule constituée de deux fenêtres sans silice (cellule vide).

ii) Elaboration d'une cellule constituée de deux fenêtres, avec un échantillon de poudre de silice à l'intérieur.
La quantité de silice introduite doit être inférieure à 50 mg. La silice doit former une couche d'épaisseur inférieure à 100 μm. On chercher de préférence à obtenir une monocouche de grains de silice disposée sur une fenêtre, ce qui est plus facile à obtenir avec des fenêtres adhésives. La qualité de la préparation est contrôlée par la mesure de la transmission (étape 2.3)).

iii) Mesure de la transmission de la cellule vide et de la cellule de silice.
On définit le rapport R de la façon suivante :

R = transmission de la cellule de silice / transmission de la cellule vide

R doit être compris entre 0,6 et 0,9, afin de minimiser les risques de diffusion multiple, tout en conservant un rapport signal sur bruit satisfaisant à grand q. Si la valeur de R est trop faible, il convient de diminuer la quantité de silice visible par le faisceau ; si elle est trop élevé, il faut rajouter de la silice.

iv) Acquisition SAXS sur la cellule vide et sur la cellule de silice.
Les temps d'acquisition doivent être déterminés de telle façon que le rapport signal/bruit à grand q soit acceptable. Ils doivent être tels qu'au voisinage immédiat de q = 0,12$Å^{-1}$, les fluctuations de la fonction F(q) définie ci-après ne doivent pas dépasser +/- 5 % par rapport à la valeur que prend la fonction F en ce point.

v) Si l'on a utilisé un détecteur bidimensionnel : regroupement radial de chacun des deux spectres bidimensionnels pour obtenir l'intensité diffusée en fonction du vecteur d'onde q.
La détermination de l'intensité diffusée doit tenir compte du temps d'exposition, de l'intensité du faisceau incident, de la transmission de l'échantillon, de l'angle solide intercepté par le pixel du détecteur. La détermination du vecteur d'onde doit tenir compte de la longueur d'onde du faisceau incident et de la distance échantillon-détecteur.

vi) Si l'on a utilisé un détecteur monodimensionnel : les déterminations précédentes concernant l'intensité diffusée et le vecteur d'onde sont à effectuer, mais il n'y a pas de regroupement radial à prévoir.

vii) On arrive ainsi à deux spectres réduisant l'information à la variation de l'intensité diffusée en fonction du vecteur d'onde q : un spectre pour la cellule vide et un spectre pour la cellule de silice.

viii) Soustraction de l'intensité diffusée par la cellule vide de l'intensité diffusée par la cellule de silice (soustraction de "background").

ix) Le spectre SAXS de la silice, après soustraction de "background", présente une décroissance monotone qui se fait selon un régime voisin du régime de Porod, c'est-à-dire que l'intensité décroît très rapidement avec le vecteur d'onde selon une loi proche d'une loi de puissance en $q^{-4}$. Les petites déviations par rapport à cette loi de Porod sont mieux visibles en représentant les données selon la méthode dite de Krattky-Porod. Il s'agit de représenter F(q) en fonction de q, avec :

$$F(q) = I \times q4$$

où I représente l'intensité diffusée après soustraction du "background" et q représente le vecteur d'onde.

x) Dans la représentation de Krattky-Porod, lorsque l'on décrit le spectre dans le sens des vecteurs d'onde croissants, la présence de deux populations de tailles de particules se traduit par une première croissance de la fonction F(q), qui caractérise les plus grosses particules, puis d'une deuxième croissance de la fonction F(q), qui caractérise les plus petites particules. On peut éventuellement observer une oscillation de l'intensité au niveau de la première croissance, qui peut s'observer si la répartition de taille des plus grosses particules est relativement resserrée.

xi) Le critère SAXS défini dans le cadre du présent exposé s'appuie sur la croissance de la fonction F entre deux bornes de vecteur d'onde définies, qui sont q1 = 0,03 $Å^{-1}$ et q2 = 0,12 $Å^{-1}$.
On définit un rapport (paramètre) C de la façon suivante :

$$C = [F(q2) - F(q1)] / F(q2)$$

xii) Un exemple de résultat expérimental sur une silice selon l'invention est donné à la figure 2.
Sur cette figure est reportée l'évolution de F(q) = I x $q^4$ avec I = intensité diffusée après soustraction du "background".
Pour cette silice, on obtient F(q1) = $3,6.10^{-3}$ et F(q2) = $1,07.10^{-2}$.
On en déduit C = ($1,07.10^{-2}$ - $3,6.10^{-3}$) / $1,07.10^{-2}$ = 0,66.

**<u>I.2 Caractérisation des compositions de caoutchouc</u>**

Les compositions de caoutchouc diénique sont caractérisées, avant et après cuisson, comme indiqué ci-après.

<u>I.2.1 Plasticité Mooney</u>

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

<u>I.2.2 Bound Rubber</u>

Le test dit de "bound rubber" permet de déterminer la proportion d'élastomère, dans une composition non vulcanisée, qui est associée à la charge renforçante si intimement que cette proportion d'élastomère est insoluble dans les solvants organiques usuels. La connaissance de cette proportion insoluble de caoutchouc, liée à la charge renforçante au cours du mélangeage, donne une indication quantitative de l'activité renforçante de la charge dans la composition de caoutchouc. Une telle méthode a été décrite par exemple dans la norme française NF T 45-114 (juin 1989) appliquée à la détermination du taux d'élastomère lié au noir de carbone.
Ce test, bien connu de l'homme du métier pour caractériser la qualité de renforcement apportée par la charge renforçante, a par exemple été décrit dans les documents suivants: Plastics, Rubber and Composites Processing and Applications, Vol. 25, No7, p. 327 (1996) ; Rubber Chemistry and Technology, Vol. 69, p. 325 (1996).
Dans le cas présent, on mesure le taux d'élastomère non extractible au toluène, après un gonflement pendant 15 jours d'un échantillon de composition de caoutchouc (typiquement 300-350 mg) dans ce solvant (par exemple dans

80-100 cm3 de toluène), suivi d'une étape de séchage de 24 heures à 100°C, sous vide, avant pesée de l'échantillon de composition de caoutchouc ainsi traité. De préférence, l'étape de gonflement ci-dessus est conduite à la température ambiante (environ 20°C) et à l'abri de la lumière, et le solvant (toluène) est changé une fois, par exemple après les cinq premiers jours de gonflement.

Le taux de "bound rubber" (% en poids), noté "BR", est calculé de manière connue par différence entre le poids initial et le poids final de l'échantillon de composition de caoutchouc, après prise en compte et élimination, dans le calcul, de la fraction des composants insolubles par nature, autres que l'élastomère, présents initialement dans la composition de caoutchouc.

I.2.3 Rhéométrie

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : ti est le délai d'induction, c'est-à-dire le temps nécessaire au début de la réaction de vulcanisation ; t$\alpha$ (par exemple t90) est le temps nécessaire pour atteindre une conversion de $\alpha$%, c'est-à-dire $\alpha$% (par exemple 90%) de l'écart entre les couples minimum et maximum. On mesure également la constante de vitesse de conversion notée K (exprimée en min-1), d'ordre 1, calculée entre 30% et 80% de conversion, qui permet d'apprécier la cinétique de vulcanisation.

I.2.4 Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants nominaux (ou contraintes apparentes, en MPa) à 10% d'allongement (notés MA10), 100% d'allongement (notés MA100) et 300% d'allongement (notés MA300). Toutes ces mesures de traction sont effectuées dans les conditions normales de température (23$\pm$2°C) et d'hygrométrie (50$\pm$5% d'humidité relative), selon la norme française NF T 40-101 (décembre 1979).

I.2.5 Propriétés dynamiques

Les propriétés dynamiques $\Delta$G* et tan($\delta$)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température (23°C) selon la norme ASTM D 1349-99, ou selon les cas à une température différente. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan($\delta$). Pour le cycle retour, on indique la valeur maximale de tan($\delta$)observée, noté tan($\delta$)max, ainsi que l'écart de module complexe ($\Delta$G*) entre les valeurs à 0.15 et 50% de déformation (effet Payne).

**I.3 Caractérisation des pneumatiques ou bandes de roulement**

I.3.1 Résistance au roulement:

La résistance au roulement est mesurée sur un volant, selon la méthode ISO 87-67 (1992). Une valeur supérieure à celle du témoin, arbitrairement fixée à 100, indique un résultat amélioré c'est-à-dire une résistance au roulement plus basse.

I.3.2 Résistance à l'usure:

On soumet les pneumatiques à un roulage réel sur route, sur un véhicule automobile déterminé, jusqu'à ce que l'usure due au roulage atteigne les témoins d'usure disposés dans les rainures de la bande de roulement. Une valeur supérieure à celle du témoin, arbitrairement fixée à 100, indique un résultat amélioré c'est-à-dire un kilométrage parcouru supérieur.

I.3.3 Adhérence sur sol sec ou sol mouillé

L'adhérence des pneumatiques est déterminée par la mesure de distances de freinage en mode « ABS » sur

sol sec ou sol humide. Plus précisément la distance de freinage en mode « ABS » est mesurée en passant, sur sol sec, d'une vitesse de 100km/h à 0 km/h (freinage « 4 ABS ») et, sur sol humide, d'une vitesse de 50 km/h à 10 km/h.

Une valeur supérieure à celle du témoin, arbitrairement fixée à 100, indique un résultat amélioré c'est-à-dire une adhérence sur sol sec ou sol mouillé améliorée.

## II CONDITIONS DE REALISATION DE L'INVENTION

Selon l'invention, les compositions de caoutchouc diénique pour pneumatique (c'est à dire destinées à la fabrication de pneumatiques ou de produits semi-finis en caoutchouc destinés à la réalisation de ces pneumatiques) conformes à l'invention sont à base d'au moins:

(i) un élastomère diénique;

(ii) à titre de charge renforçante, une charge inorganique constituée en tout ou partie d'une silice spécifique;

(iii) un agent de couplage assurant la liaison entre la charge inorganique et l'élastomère diénique

Bien entendu, par l'expression composition "à base de", il faut entendre une composition comportant le mélange et/ou le produit de réaction in situ des différents constituants utilisés, certains de ces constituants de base étant susceptibles de, ou destinés à réagir entre eux, au moins en partie, lors des différentes phases de fabrication des bandes de roulement et pneumatiques, en particulier au cours de leur vulcanisation.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### <u>II-1. Elastomère diénique</u>

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:

(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alk-

yle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiéne, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le paratertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

## II-2. Charge inorganique renforçante

On rappelle que par "charge inorganique renforçante", doit être entendu de manière connue une charge inorganique ou minérale, quelles que soient sa couleur et son origine (naturelle ou de synthèse), encore appelée charge "blanche" ou parfois charge "claire" par opposition au noir de carbone, capable de renforcer à elle seule, sans autre moyen qu'un agent de couplage intermédiaire, une composition de caoutchouc diénique destinée à la fabrication de pneumatiques, en d'autres termes apte à remplacer, dans sa fonction de renforcement, une charge conventionnelle de noir de carbone de grade pneumatique.

La composition de caoutchouc diénique pour pneumatique (c'est à dire destinée à la fabrication de pneumatiques ou de produits semi-finis en caoutchouc destinés à la réalisation de ces pneumatiques) a pour caractéristique essentielle, selon un premier aspect de l'invention d'être renforcée par une charge inorganique renforçante comportant, de préférence à titre majoritaire, une silice spécifique susceptible d'être obtenue selon un procédé comprenant la réaction d'un silicate avec un agent acidifiant ce par quoi l'on obtient une suspension de silice, puis la séparation et le séchage de cette suspension.

Ce procédé de préparation de silice précipitée est caractérisé en ce que la réaction du silicate avec l'agent acidifiant est réalisée selon les étapes successives suivantes :

(i) on met en contact (mélange) une suspension aqueuse de silice précipitée, présentant un pH compris entre 2,5 et 5,3, avec de l'agent acidifiant et du silicate, de telle manière que le pH du milieu réactionnel soit maintenu entre 2,5 et 5,3,

(ii) on ajoute dans le milieu réactionnel obtenu un agent alcalin, de préférence du silicate, et ce de manière à augmenter le pH du milieu réactionnel jusqu'à une valeur comprise entre 4,7 et 6,3.

Selon un mode de réalisation préféré du procédé de l'invention, la suspension aqueuse de silice précipitée, utilisée dans l'étape (i), est préparée de la manière suivante :

(1) on forme un pied de cuve initial comportant du silicate et un électrolyte, la concentration en silicate (exprimée en $SiO_2$) dans ledit pied de cuve initial étant inférieure à 100 g/L, en particulier inférieure à 80 g/L, et, de manière préférée, la concentration en électrolyte dans ledit pied de cuve initial étant inférieure à 17 g/L, en particulier inférieure à 15 g/L,

(2) on ajoute de l'agent acidifiant audit pied de cuve jusqu'à l'obtention d'une valeur du pH du milieu réactionnel d'au moins environ 7, de préférence comprise entre 7,5 et 8,5,

(3) on ajoute au milieu réactionnel, simultanément, de l'agent acidifiant et du silicate,

(4) on arrête l'addition du silicate tout en continuant l'addition de l'agent acidifiant dans le milieu réactionnel, jusqu'à l'obtention d'une valeur du pH du milieu réactionnel comprise entre 2,5 et 5,3, de préférence entre 2,8 et 4,9.

Il a été ainsi trouvé que l'enchaînement d'étapes spécifiques, au niveau du procédé, et notamment au niveau de son mode de réalisation préféré décrit ci-dessus, constituait une condition importante pour conférer aux produits obtenus leurs caractéristiques et propriétés particulières.

Dans le procédé, et en particulier dans son mode de réalisation préféré, le choix de l'agent acidifiant, de l'agent alcalin et du silicate se fait d'une manière bien connue en soi.

On utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/L, par exemple entre 60 et 130 g/L.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration (exprimée en $SiO_2$) comprise entre 40 et 330 g/L, par exemple entre 60 et 300 g/L, en particulier entre 60 et 260 g/L.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral $SiO_2/Na_2O$ compris entre 2,5 et 4, par exemple entre 3,2 et 3,8.

L'agent alcalin employé lors de l'étape (ii) peut être par exemple une solution de soude, de potasse ou d'ammoniac. De préférence, cet agent alcalin est du silicate, en particulier du silicate tel qu'utilisé lors de l'étape (i).

En ce qui concerne plus particulièrement le procédé de préparation de l'invention, la réaction du silicate avec l'agent acidifiant se fait d'une manière spécifique selon les étapes suivantes.

On met en contact (étape (i)) :

- une suspension aqueuse de silice précipitée (qui peut être une bouillie réactionnelle de silice précipitée), ladite suspension présentant un pH compris entre 2,5 et 5,3, de préférence entre 2,8 et 4,9, par exemple entre 2,9 et 4,5 (voire entre 3,5 et 4,4),
- avec de l'agent acidifiant et du silicate,

de telle manière (en particulier à des débits tels) que le pH du milieu réactionnel soit maintenu entre 2,5 et 5,3, de préférence entre 2,8 et 4,9, par exemple entre 2,9 et 4,5 (voire entre 3,5 et 4,4).

Ledit pH du milieu réactionnel peut varier à l'intérieur de la plage 2,5-5,3, de préférence de la plage 2,8-4,9, par exemple 2,9-4,5 (voire 3,5-4,4), ou de manière préférée rester (sensiblement) constant à l'interieur de ces plages.

En général, dans cette étape (i), la mise en contact de la suspension aqueuse avec l'agent acidifiant et le silicate est effectuée en ajoutant de l'agent acidifiant et du silicate à la suspension aqueuse de silice précipitée.

Selon une variante du procédé de l'invention, dans l'étape (i), on ajoute à la suspension aqueuse de silice précipitée d'abord l'agent acidifiant, puis le silicate.

Cependant, selon une variante préférée du procédé de l'invention, dans l'étape (i), on ajoute plutôt simultanément l'agent acidifiant et le silicate à la suspension aqueuse de silice précipitée ; de préférence, cette addition simultanée est effectuée avec régulation du pH du milieu réactionnel à une valeur (sensiblement) constante à l'intérieur des plages précitées.

La deuxième étape (ii) du procédé consiste en une addition, dans le milieu réactionnel obtenu à l'issue de l'étape (i), d'un agent alcalin, de préférence de silicate, et ce jusqu'à atteindre une valeur du pH du milieu réactionnel comprise entre 4,7 et 6,3, de préférence entre 5,0 et 5,8, par exemple entre 5,0 et 5,4.

Cette deuxième étape peut être optionnelle (c'est-à-dire ne pas être mise en oeuvre) dans le cas où dans l'étape (i) on met en contact (mélange) une suspension aqueuse de silice précipitée, présentant un pH compris entre 5,0 et 5,3, avec de l'agent acidifiant et du silicate, de telle manière que le pH du milieu réactionnel soit maintenu entre 5,0 et 5,3.
De manière préférée, le procédé comporte l'étape (ii).
L'étape (ii) est habituellement effectuée sous agitation.
C'est en général également le cas de l'ensemble de la réaction (étapes (i) + (ii)). L'ensemble de la réaction est généralement réalisé entre 75 et 97 °C, de préférence entre 80 et 96 °C.
Il peut être avantageux de procéder à l'issue de l'étape (ii) à un mûrissement du milieu réactionnel obtenu, notamment au pH obtenu à l'issue de cette étape (ii), et en général sous agitation. Ce mûrissement peut par exemple durer de 2 à 30 minutes, en particulier de 3 à 20 minutes et peut être réalisé entre 75 et 97 °C, de préférence entre 80 et 96 °C, en particulier à la température à laquelle a été effectuée l'étape (ii). Il ne comporte préférentiellement ni addition d'agent acidifiant, ni addition de silicate.
Selon le mode préféré de réalisation du procédé de l'invention, la réaction du silicate avec l'agent acidifiant est réalisée selon les étapes successives suivantes :

(1) on forme un pied de cuve initial comportant du silicate et un électrolyte, la concentration en silicate (exprimée en $SiO_2$) dans ledit pied de cuve initial étant inférieure à 100 g/L, en particulier inférieure à 80 g/L, et, de manière préférée, la concentration en électrolyte dans ledit pied de cuve initial étant inférieure à 17 g/L, en particulier inférieure à 15 g/L, par exemple inférieure à 14 g/L,

(2) on ajoute de l'agent acidifiant audit pied de cuve jusqu'à l'obtention d'une valeur du pH du milieu réactionnel d'au moins environ 7, de préférence comprise entre 7,5 et 8,5, par exemple égale à environ 8,

(3) on ajoute au milieu réactionnel, simultanément, de l'agent acidifiant et du silicate, en particulier de telle manière (en particulier à des débits tels) que le pH du milieu réactionnel soit maintenu à au moins environ 7, de préférence entre 7,5 et 8,5, par exemple à environ 8,

(4) on arrête l'addition du silicate tout en continuant l'addition de l'agent acidifiant dans le milieu réactionnel, jusqu'à l'obtention d'une valeur du pH du milieu réactionnel comprise entre 2,5 et 5,3, de préférence entre 2,8 et 4,9, par exemple entre 2,9 et 4,5 (voire entre 3,5 et 4,4),

> (i) on met en contact (mélange) la suspension aqueuse (milieu réactionnel) obtenue à l'issue de l'étape (4) avec de l'agent acidifiant et du silicate, de telle manière que le pH du milieu réactionnel soit maintenu entre 2,5 et 5,3, de préférence entre 2,8 et 4,9, par exemple entre 2,9 et 4,5 (voire entre 3,5 et 4,4),
> (ii) on ajoute dans le milieu réactionnel obtenu un agent alcalin, de préférence du silicate, et ce jusqu'à atteindre une valeur du pH du milieu réactionnel comprise entre 4,7 et 6,3, de préférence entre 5,0 et 5,8, par exemple entre 5,0 et 5,4.

Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.
Dans l'étape (1), la concentration en électrolyte du pied de cuve initial est supérieure à 0 g/L, par exemple supérieure à 8 g/L.
L'addition simultanée de l'étape (3) est généralement réalisée de manière telle que la valeur du pH du milieu réactionnel soit constamment égale (à $\pm$ 0,2 près) à celle atteinte à l'issue de l'étape (2).
Il peut être procédé à l'issue de l'étape (4) à un mûrissement du milieu réactionnel (suspension aqueuse) obtenu, au pH obtenu à l'issue de cette étape (4), et en général sous agitation, par exemple pendant 2 à 45 minutes, en particulier pendant 3 à 30 minutes.
Les étapes (1) à (4), comme en général l'ensemble de la réaction, sont le plus souvent effectuées sous agitation.
De même, toutes les étapes sont habituellement réalisées entre 75 et 97 °C, de préférence entre 80 et 96 °C.
Selon une variante du mode de réalisation préféré du procédé de l'invention, l'ensemble des étapes est effectué à une température constante.
Selon une autre variante du mode de réalisation préféré du procédé de l'invention, la température de fin de réaction est plus élevée que la température de début de réaction : ainsi, on maintient la température au début de la

réaction (par exemple au cours des étapes (1) et (2)) de préférence entre 75 et 90 °C, puis on augmente la température, de préférence jusqu'à une valeur comprise entre 90 et 97 °C, valeur à laquelle elle est maintenue (par exemple au cours des étapes (3), (4), (i) et (ii)) jusqu'à la fin de la réaction.

Dans le procédé, et en particulier dans le mode de réalisation préféré du procédé, l'étape (i) peut être effectuée dans un mélangeur rapide ou dans une zone d'écoulement turbulent, ce qui peut permettre un meilleur contrôle des caractéristiques des silices précipitées obtenues.

Par exemple, dans le cas où, dans l'étape (i), on ajoute à la suspension aqueuse de silice précipitée d'abord l'agent acidifiant, puis le silicate, alors la mise en contact dudit silicate avec le milieu résultant de l'ajout de l'agent acidifiant à la suspension aqueuse de silice précipitée peut être effectuée dans un mélangeur rapide ou dans une zone d'écoulement turbulent.

De même, dans le cas où, dans l'étape (i), on ajoute simultanément l'agent acidifiant et le silicate à la suspension aqueuse de silice précipitée, alors la mise en contact dudit agent acidifiant et dudit silicate avec la suspension aqueuse de silice précipitée peut être effectuée dans un mélangeur rapide ou dans une zone d'écoulement turbulent.

De préférence, le milieu réactionnel obtenu dans le mélangeur rapide ou dans une zone d'écoulement turbulent alimente un réacteur, de préférence soumis à une agitation, réacteur dans lequel l'étape (ii) est ensuite mise en oeuvre.

Dans l'étape (i), on peut utiliser un mélangeur rapide choisi parmi les mélangeurs (ou tubes) en T ou en Y symétriques, les mélangeurs (ou tubes) en T ou en Y asymétriques, les mélangeurs à jets tangentiels, les mélangeurs Hartridge-Roughton, les mélangeurs vortex, les mélangeurs rotor-stators.

Les mélangeurs (ou tubes) en T ou en Y symétriques sont généralement constitués de deux tubes opposés (tubes en T) ou formant un angle inférieur à 180° (tubes en Y), de même diamètre, déchargeant dans un tube central dont le diamètre est identique ou supérieur à celui des deux tubes précédents. Ils sont dits « symétriques » car les deux tubes d'injection des réactifs présentent le même diamètre et le même angle par rapport au tube central, le dispositif étant caractérisé par un axe de symétrie. De préférence, le tube central présente un diamètre deux fois plus élevés environ que le diamètre des tubes opposés ; de même la vitesse de fluide dans le tube central est de préférence égale à la moitié de celle dans les tubes opposés.

On préfère cependant employer, en particulier lorsque les deux fluides à introduire ne présentent pas le même débit, un mélangeur (ou tube) en T ou en Y asymétriques plutôt qu'un mélangeur (ou tube) en T ou en Y symétrique. Dans les dispositifs asymétriques, un des fluides (le fluide de plus faible débit en général) est injecté dans le tube central au moyen d'un tube latéral de diamètre plus faible. Ce dernier forme avec le tube central un angle de 90° en général (tube en T) ; cet angle peut être différent de 90° (tube en Y), donnant des systèmes à co-courant (par exemple angle de 45°) ou à contre-courant (par exemple angle de 135°) par rapport à l'autre courant.

A titre de mélangeur rapide, on utilise de préférence un mélangeur à jets tangentiels, un mélangeur Hartridge-Roughton ou un mélangeur (ou précipiteur) vortex, qui dérivent des dispositifs en T symétriques.

Plus particulièrement, dans l'étape (i), on peut mettre en oeuvre un mélangeur rapide à jets tangentiels, Hartridge-Roughton ou vortex, comprenant une chambre ayant (a) au moins deux admissions tangentielles par lesquelles entrent séparément (mais en même temps) soit, d'une part, le silicate, et, d'autre part, le milieu résultant de l'ajout d'agent acidifiant à la suspension aqueuse de silice précipitée, soit, d'une part, le silicate et l'agent acidifiant, et, d'autre part, la suspension aqueuse de silice précipitée, et (b) une sortie axiale par laquelle sort le milieu réactionnel et ce, de préférence, vers un(e) réacteur (cuve) disposé(e) en série après ledit mélangeur. Les deux admissions tangentielles sont de préférence situées symétriquement, et de manière opposée, par rapport à l'axe central de ladite chambre.

La chambre du mélangeur à jets tangentiels, Hartridge-Roughton ou vortex éventuellement utilisé présente généralement une section circulaire et est de préférence de forme cylindrique.

Chaque tube d'admission tangentielle peut présenter un diamètre interne d de 0,5 à 80 mm.

Ce diamètre interne d peut être compris entre 0,5 et 10 mm, en particulier entre 1 et 9 mm, par exemple entre 2 et 7 mm. Cependant, notamment à l'échelle industrielle, il est de préférence compris entre 10 et 80 mm, en particulier entre 20 et 60 mm, par exemple entre 30 et 50 mm.

Le diamètre interne de la chambre du mélangeur à jets tangentiels, Hartridge-Roughton ou vortex éventuellement employé peut être compris entre 3d et 6d, en particulier entre 3d et 5d, par exemple égal à 4d ; le diamètre interne du tube de sortie axiale peut être compris entre 1d et 3d, en particulier entre 1,5d et 2,5d, par exemple égal à 2d.

Les débits du silicate et de l'agent acidifiant sont par exemple déterminés de façon à ce qu'au point de confluence les deux courants de réactifs entrent en contact l'un avec l'autre dans une zone d'écoulement suffisamment turbulent.

Dans le procédé, et en particulier dans le mode de réalisation préféré du procédé, on obtient, à l'issue de l'étape (ii), éventuellement suivie d'un mûrissement, une bouillie de silice qui est ensuite séparée (séparation liquide-solide).

La séparation mise en oeuvre dans le procédé de préparation, et notamment dans son mode de réalisation préféré, comprend habituellement une filtration, suivie d'un lavage si nécessaire. La filtration s'effectue selon toute méthode convenable, par exemple au moyen d'un filtre presse, d'un filtre à bande, d'un filtre sous vide.

La suspension de silice ainsi récupérée (gâteau de filtration) est ensuite séchée.

Ce séchage peut se faire selon tout moyen connu en soi.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée mécaniquement, par passage du gâteau dans un broyeur de type colloïdal ou à bille. Le délitage est généralement effectué en présence d'un composé de l'aluminium, en particulier d'aluminate de sodium et, éventuellement, en présence d'un agent acidifiant tel que décrit précédemment (dans ce dernier cas, le composé de l'aluminium et l'agent acidifiant sont généralement ajoutés de manière simultanée). L'opération de délitage permet notamment d'abaisser la viscosité de la suspension à sécher ultérieurement.

Lorsque le séchage est effectué à l'aide d'un atomiseur à buses, la silice susceptible d'être alors obtenue se présente habituellement sous forme de billes sensiblement sphériques. A l'issue du séchage, on peut alors procéder à une étape de broyage sur le produit récupéré. La silice qui est alors susceptible d'être obtenue se présente généralement sous forme d'une poudre.

Lorsque le séchage est effectué à l'aide d'un atomiseur à turbines, la silice susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice ...), une extrusion ou, de préférence, un compactage à sec. Lorsque l'on met en oeuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice susceptible d'être alors obtenue par cette étape d'agglomération se présente généralement sous la forme de granulés.

Les poudres, de même que les billes, de silice obtenues par le procédé précité offrent ainsi l'avantage, entre autre, d'accéder de manière simple, efficace et économique, à des granulés, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes, comme cela peut être le cas dans l'art antérieur en mettant en oeuvre des poudres classiques.

Ce procédé de préparation, en particulier selon son mode préféré, permet notamment d'obtenir des silices précipitées spécifiques présentant généralement une bonne aptitude à la dispersion (dispersibilité) dans les polymères et conférant à ceux-ci un compromis de propriétés très satisfaisant. Les silices précipitées spécifiques obtenues présentent de préférence une morphologie, une granulométrie et une porosité particulières.

Ce procédé de préparation permet notamment d'obtenir des silices précipitées spécifiques, qui, d'une part, sont non friables et présentent généralement une aptitude satisfaisante à la dispersion (dispersibilité) dans les élastomères diéniques, et, d'autre part, possèdent un bon effet de renforcement.

Les silices spécifiques obtenues selon ce procédé original, possèdent une morphologie particulière : elle est en effet formée d'agrégats de particules primaires (A) de silice à la surface desquels se trouvent (sont greffées) des particules primaires (B) de silice de taille inférieure à celle des particules primaires (A) et peuvent avantageusement être mises en oeuvre comme charges renforçantes dans des compositions de caoutchouc diénique destinées à la fabrication de pneumatiques.

Ces silices spécifiques sont également caractérisées en ce qu'elle possède :

- une surface spécifique CTAB ($S_{CTAB}$) comprise entre 60 et 400 $m^2/g$,
- une taille médiane d50 d'agrégats (particules primaires (A) ou grosses particules primaires + particules primaires (B) ou petites particules primaires), mesurée par granulométrie XDC après désagglomération aux ultra-sons, telle que : d50 (nm) > (6214 / $S_{CTAB}$ ($m^2/g$)) + 23,
- une répartition du volume poreux telle que :

  telle que :

$$V_{(d5 - d50)} / V_{(d5 - d100)} > 0,906 - (0,0013 \times S_{CTAB} (m^2/g)),$$

  et
- une distribution de tailles (diamètres) de pores telle que :

$$\text{Mode (nm)} > (4166 \times S_{CTAB} (m^2/g)) - 9{,}2.$$

De préférence, la silice précipitée spécifique présente un paramètre C, mesuré par diffusion de rayons X aux petits angles (SAXS), tel que :

$$C / S_{CTAB} (m^2/g) > 0{,}001.$$

Ceci illustre une morphologie particulière, par exemple la présence de deux populations de particules primaires de tailles différentes.

La silice précipitée spécifique est avantageusement formée d'agrégats de grosses particules primaires de silice sur lesquels se trouvent (sont greffées) des petites particules primaires (ppp) de silice, le diamètre médian en nombre des grosses particules primaires (gpp) étant d'au moins 12 nm, en particulier d'au moins 13 nm, par exemple d'au moins 14 nm, voire d'au moins 17 nm, et le diamètre médian en nombre des petites particules primaires (ppp) étant compris entre 2 et 8 nm, en particulier entre 3 et 6 nm, par exemple entre 3 et 5 nm (diamètres déterminés par MET).

En général, la silice précipitée spécifique contient (détermination par MET par exemple) 30 à 95 %, de préférence 55 à 90 %, en particulier 60 à 85 %, en nombre de particules primaires (B) (ou petites particules primaires), et, 5 à 70 %, de préférence 10 à 45 %, en particulier 15 à 40 %, en nombre de particules primaires (A) (ou grosses particules primaires).

De manière préférée, dans la silice précipitée spécifique, il y a très peu voire pas de petites particules primaires isolées ("hors-grain"), agrégées entre elles ou non, c'est-à-dire non reliées à des agrégats de grosses particules primaires. La proportion de telles petites particules primaires isolées est en général inférieure à 10 % en nombre, en particulier inférieure à 5 % en nombre, par exemple sensiblement nulle.

De manière avantageuse, dans cette silice spécifique, les petites particules primaires sont solidement accrochées aux agrégats de grosses particules primaires.

De manière préférée, la répartition du volume poreux de la silice précipitée spécifique est en outre telle que $V_{(d5 - d50)} / V_{(d5 - d100)} > 0{,}71$, en particulier

$$V_{(d5 - d50)} / V_{(d5 - d100)} > 0{,}72.$$

La silice précipitée spécifique possède une surface spécifique CTAB ($S_{CTAB}$) comprise entre 60 et 400 $m^2/g$, de préférence entre 80 et 300 $m^2/g$, en particulier entre 100 et 250 $m^2/g$. Elle peut être comprise entre 120 et 230 $m^2/g$, notamment entre 130 et 210 $m^2/g$, par exemple entre 140 et 200 $m^2/g$.

Elle présente généralement une surface spécifique BET ($S_{BET}$) comprise entre 60 et 500 $m^2/g$, de préférence entre 90 et 380 $m^2/g$, en particulier entre 120 et 300 $m^2/g$. Elle peut être comprise entre 140 et 270 $m^2/g$, notamment entre 160 et 260 $m^2/g$, par exemple entre 175 et 250 $m^2/g$.

De préférence, la silice précipitée spécifique présente une certaine microporosité, cependant pas trop importante ; ainsi, en général, sa surface spécifique CTAB ($S_{CTAB}$) et sa surface spécifique BET ($S_{BET}$) sont telles que le rapport $S_{BET} / S_{CTAB}$ est compris entre 1,0 et 1,5, de préférence entre 1,1 et 1,4, en particulier entre 1,15 et 1,35.

Les silices précipitées spécifiques présentent de préférence une aptitude satisfaisante à la dispersion (dispersibilité) dans les polymères.

Leur diamètre médian ($D_{50M}$), après désagglomération aux ultra-sons, est en général inférieur à 6,0 $\mu$m, de préférence inférieur à 5,0 $\mu$m ; il peut être en particulier inférieur à 4,0 $\mu$m, par exemple inférieur à 3,0 $\mu$m.

Elles peuvent posséder également une vitesse de désagglomération $\alpha$, mesurée au test de désagglomération aux ultra-sons en mode continu décrit précédemment, à 100 % de puissance d'une sonde à ultra-sons de 600 watts, d'au moins 0,020 $\mu m^{-1}.min^{-1}$.

Le nombre de silanols par $nm^2$, $N_{SiOH/nm^2}$, des silices réalisées selon le procédé précité est habituellement compris entre 3,5 et 6, notamment entre 3,9 et 5,5.

Le pH des silices précipitées obtenues est habituellement compris entre 6,2 et 7,6, notamment entre 6,4 et 7,4.

Elles peuvent se présenter sous forme de billes sensiblement sphériques de taille moyenne d'au moins 80 $\mu$m.

Cette taille moyenne des billes peut être d'au moins 100 $\mu$m, par exemple d'au moins 150 $\mu$m ; elle est généralement d'au plus 300 $\mu$m et se situe de préférence entre 100 et 270 $\mu$m, notamment entre 200 et 260 $\mu$m. Cette taille moyenne est déterminée selon la norme NF X 11507 (décembre 1970) par tamisage à sec et détermination du diamètre correspondant à un refus cumulé de 50 %.

Les silices spécifiques peuvent également se présenter sous forme de poudre, généralement de taille moyenne

d'au moins 3 μm, en particulier d'au moins 10 μm, par exemple d'au moins 15 μm ; celle-ci peut être comprise entre 15 et 60 μm (notamment entre 20 et 45 μm) ou entre 30 et 150 μm (notamment entre 45 et 120 μm).

Elles peuvent aussi se présenter sous forme de granulés (en général de forme sensiblement parallélépipédique), en particulier de taille d'au moins 1 mm, par exemple comprise entre 1 et 10 mm, notamment selon l'axe de leur plus grande dimension (longueur).

Les silices spécifiques sont de préférence préparées selon le procédé de préparation conforme à l'invention et décrit précédemment, en particulier selon le mode de réalisation préféré dudit procédé.

La silice spécifique ci-dessus peut avantageusement constituer la totalité de la charge inorganique renforçante. Mais, à cette silice spécifique peut être éventuellement associée au moins une autre charge inorganique renforçante conventionnelle. Dans un tel cas, le taux de chacune de ses charges inorganiques peut varier de 1 à 99% en poids de la charge inorganique renforçante totale. En particulier, il est avantageux que la silice spécifique utilisée constitue au moins 50% en poids de la charge inorganique renforçante totale, plus préférentiellement encore plus de 80% en poids de cette charge inorganique renforçante totale.

A titre d'exemple de charge inorganique renforçante conventionnelle utilisable le cas échéant en complément, on citera notamment des silices hautement dispersibles telles que les silices BV3380 et Ultrasil 7000 de la société Degussa, les silices Zeosil 1165MP et 1115MP de la société Rhodia, la silice Hi-Sil 2000 de la société PPG, les silices Zeopol 8715 ou 8745 de la Société Huber, des silices précipitées traitées telles que par exemple les silices "dopées" à l'aluminium décrites dans la demande EP-A-0735088 précitée, ou encore des alumines renforçantes hautement dispersibles telle que décrites dans la demande EP-A-0810258, par exemple des alumines A125 ou CR125 de la société Baïkowski.

A titre d'autres exemples de charge inorganique susceptible d'être utilisée dans les compositions de caoutchouc de l'invention peuvent être encore cités des (oxyde-)hydroxydes d'aluminium, des aluminosilicates, des oxydes de titane, des carbures ou nitrures de silicium, tous du type renforçants tels que décrits par exemple dans les demandes WO 99/28376, WO 00/73372, WO 02/053634, WO 2004/003067, WO 2004/056915.

L'homme du métier comprendra que, à titre de charge équivalente d'une telle charge inorganique renforçante complémentaire, pourrait être utilisée une charge renforçante du type organique, notamment un noir de carbone pour pneumatique, recouvert au moins en partie d'une couche inorganique, notamment de silice, nécessitant quant à elle l'utilisation d'un agent de couplage pour assurer la liaison avec l'élastomère.

La silice spécifique utilisée seule ou en coupage avec d'autres charges inorganiques renforçantes, peut également être utilisée en coupage avec des charges organiques renforçantes de sorte que cette silice spécifique représente de 1 à 99% en poids de la charge renforçante totale, la charge organique renforçante représentant alors de 99% à 1% en poids de la charge renforçante totale.

De préférence la silice spécifique représente plus de 10 % de la charge renforçante totale, et plus préférentiellement plus de 20% de cette charge renforçante totale et encore plus préférentiellement plus de 50%.

A titre de charge organique renforçante, conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

On notera que même lorsque la charge inorganique est majoritaire, on peut l'associer à un noir de carbone alors préférentiellement utilisé en faible proportion, à un taux compris de préférence entre 2 et 20 pce, plus préférentiellement dans un domaine de 5 à 15 pce. Dans les intervalles indiqués, on bénéficie des propriétés colorantes (agent de pigmentation noire) et anti-UV des noirs de carbone, sans pénaliser par ailleurs les performances typiques apportées par la silice.

De manière préférentielle, le taux de charge renforçante totale (charge inorganique renforçante et charge organique renforçante le cas échéant) est compris dans un domaine allant de 20 à 300 pce, plus préférentiellement de 30 à 150 pce, encore plus préférentiellement de 50 à 130 pce (parties en poids pour cent d'élastomère), l'optimum étant différent selon la nature de la charge inorganique renforçante utilisée et selon les applications visées : le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Pour les bandes de roulement de pneumatiques aptes à rouler à grande vitesse, la quantité de silice spécifique

préparée selon le procédé de préparation décrit plus haut et/ou présentant les caractéristiques décrites ci-dessus, est de préférence comprise entre 30 et 120 pce, plus préférentiellement comprise entre 40 et 100 pce.

**II.3 Agent de couplage**

Il est bien connu de l'homme du métier qu'il est nécessaire d'utiliser, dans le cas d'une charge inorganique renforçante, un agent de couplage encore appelé agent de liaison qui a pour fonction d'assurer la liaison ou "couplage" entre la charge inorganique et l'élastomère, tout en facilitant la dispersion de cette charge inorganique au sein de la matrice élastomérique.

L'hydroxyde de magnésium renforçant nécessite lui aussi l'emploi d'un tel agent de couplage pour assurer sa fonction de charge renforçante dans les compositions de caoutchouc conformes à l'invention.

Par agent de couplage, on entend plus précisément un agent apte à établir une connexion suffisante, de nature chimique et/ou physique, entre la charge considérée et l'élastomère ; un tel agent de couplage, au moins bifonctionnel, a par exemple comme formule générale simplifiée " Y-T-X ", dans laquelle :

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique ;
- X représente un groupe fonctionnel (fonction "X") capable de se lier physiquement et/ou chimiquement à l'élastomère, par exemple par l'intermédiaire d'un atome de soufre ;
- T représente un groupe permettant de relier Y et X.

Les agents de couplage ne doivent en particulier pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère.

De tels agents de couplage, d'efficacité variable, ont été décrits dans un très grand nombre de documents et sont bien connus de l'homme du métier. On peut utiliser en fait tout agent de couplage susceptible d'assurer efficacement la liaison ou couplage entre une charge inorganique renforçante telle que silice et un élastomère diénique, comme par exemple un organosilane, notamment un alkoxysilane sulfuré, ou encore un polyorganosiloxane au moins bifonctionnel (porteur des fonctions X et Y précitées).

Des agents de couplage silice/élastomère, notamment, ont été décrits dans un grand nombre de documents, les plus connus étant des alkoxysilanes bifonctionnels tels que des alkoxysilanes sulfurés. On utilise en particulier des alkoxysilanes sulfurés, dits "symétriques" ou "asymétriques" selon leur structure particulière, tels que décrits par exemple dans les demandes de brevet ou brevets US-A-3 842 111, US-A-3 873 489, US-A-3 978 103, US-A-3 997 581, US-A-4 002 594, US-A-4 072 701, US-A-4 129 585, ou dans les documents plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, WO 02/083782 ou qui énoncent en détail de tels composés connus.

Conviennent en particulier pour la mise en oeuvre de l'invention, sans que la définition ci-après soit limitative, des alkoxysilanes polysulfurés symétriques répondant à la formule générale (I) suivante:

(I) $Z - A - S_n - A - Z$ ,

dans laquelle:

- n est un entier de 2 à 8 (de préférence de 2 à 5);
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$ en particulier le propylène);
- Z répond à l'une des formules ci-après:

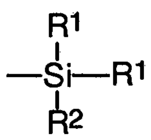 ; 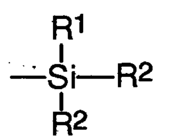 ; 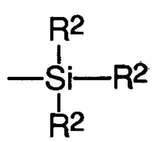 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe hydroxyle ou alkoxyle en $C_1$-$C_{18}$ ou cycloalkoxyle en $C_5$-$C_{18}$ (de préférence des groupes hydroxyle, alkoxyle en $C_1$-$C_8$ ou cycloalkoxyle en $C_5$-$C_8$, plus préférentiellement des groupes hydroxyle ou alkoxyle en $C_1$-$C_4$, en particulier hydroxyle, méthoxyle et/ou éthoxyle).

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des alkoxysilanes disulfurés (n = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl) tels que le tétrasulfure de bis(3-tri-éthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$.

Le TESPD est commercialisé par exemple par la société Degussa sous la dénomination Si75 (sous forme d'un mélange de disulfure - à 75% en poids - et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

On citera également comme agents de couplage préférentiels les polysulfures (notamment disulfures, trisulfures ou tétrasulfures) de bis-(monoalkoxyl($C_1$-$C_4$)-dialkyl($C_1$-$C_4$)silyl-propyl), plus particulièrement le tétrasulfure de bis-monoéthoxydiméthylsilylpropyl tel que décrit dans la demande WO 02/083782.

A titre d'exemples d'agents de couplage autres que les alkoxysilanes polysulfurés précités, on citera notamment des polyorganosiloxanes bifonctionnels tels que décrits par exemple dans les demandes WO 99/02602 ou WO 01/96442, ou encore les polysulfures d'hydroxysilane ($R^2$ représente alors OH dans la formule I ci-dessus) tels que décrits dans les demandes WO 02/30939 et WO 02/31041, ), ou encore des silanes ou POS porteurs de groupements fonctionnels azo-dicarbonyle, tels que décrits par exemple dans les demandes de brevet WO 2006/125532, WO 2006/125533, WO 2006/125534.

L'homme du métier saura ajuster la teneur en agent de couplage dans les compositions de l'invention, en fonction de l'application visée, de la nature de l'élastomère utilisé et de la quantité d'hydroxyde de Mg renforçant, complété le cas échéant de toute autre charge inorganique employée à titre de charge renforçante complémentaire.

Le taux d'agent de couplage, ramené au poids d'élastomère diénique, est de préférence compris entre 0,1 et 15 pce, plus préférentiellement compris entre 0,5 et 10 pce.

L'agent de couplage utilisé pourrait être préalablement greffé (via la fonction "X") sur l'élastomère diénique de la composition de l'invention, l'élastomère ainsi fonctionnalisé ou précouplé comportant alors la fonction "Y" libre pour l'hydroxyde de magnésium renforçant. L'agent de couplage pourrait également être préalablement greffé (via la fonction "Y") sur l'hydroxyde de magnésium renforçant, la charge ainsi "précouplée" pouvant ensuite être liée à l'élastomère diénique par l'intermédiaire des fonctions libres "X". On préfère toutefois utiliser l'agent de couplage à l'état libre (i.e., non greffé) ou greffé sur l'hydroxyde de magnésium renforçant, notamment pour des raisons de meilleure processabilité des compositions à l'état cru.

### II.4 Additifs divers

Bien entendu, les compositions élastomériques pour pneumatique conformes à l'invention comportent également tout ou partie des additifs usuels utilisés dans des compositions de caoutchouc diénique destinées notamment à la fabrication de bandes de roulement de pneumatique, comme par exemple des huiles d'extension, des plastifiants, des agents de protection tels que cires anti-ozone, anti-ozonants chimiques, anti-oxydants, agents anti-fatigue, des promoteurs d'adhésion, des activateurs de couplage, des résines renforçantes, des accepteurs et/ou donneurs de méthylène, un système de réticulation à base soit de soufre, soit de donneurs de soufre et/ou de peroxyde et/ou de bismaléimides, des accélérateurs de vulcanisation, des activateurs de vulcanisation.

A titre d'agent plastifiant préférentiel non aromatique ou très faiblement aromatique, au moins un composé choisi dans le groupe constitué par les huiles naphténiques, paraffiniques, huiles MES, huiles TDAE, les plastifiants esters (par exemple les trioléates de glycérol), les résines hydrocarbonées présentant une haute Tg, de préférence supérieure à 30°C, telles que décrites par exemple dans les demandes WO 2005/087859, WO 2006/061064 et WO

2007/017060, et les mélanges de tels composés. Le taux global d'un tel agent plastifiant préférentiel est de préférence compris entre 10 et 100 pce, plus préférentiellement compris entre 20 et 80 pce, notamment dans un domaine de 10 à 50 pce.

Parmi les résines plastifiantes hydrocarbonées ci-dessus (on rappelle que l'appellation "résine" est réservée par définition à un composé solide), on citera notamment les résines d'homo- ou copolymères d'alphapinène, betapinène, dipentène ou polylimonène, coupe C5, par exemple de copolymère coupe C5/styrène ou de copolymère coupe C5/coupe C9, utilisables seules ou en combinaison avec des huiles plastifiantes comme par exemple des huiles MES ou TDAE.

A la silice utilisée dans l'invention peut être également associée, si besoin est, une charge blanche conventionnelle peu ou non renforçante, par exemple des particules d'argile, bentonite, talc, craie, kaolin, utilisables par exemple dans des bandes de roulement de pneumatique colorées.

Les compositions élastomériques peuvent également contenir, en complément des agents de couplage précédemment décrits, des agents de recouvrement pour charges inorganiques, comportant par exemple la seule fonction Y, ou plus généralement des agents d'aide à la mise en oeuvre susceptibles de manière connue, grâce à une amélioration de la dispersion de la charge inorganique renforçante dans la matrice de caoutchouc et à un abaissement de la viscosité des compositions, d'améliorer leur faculté de mise en oeuvre à l'état cru ; ces agents, utilisés à un taux préférentiel compris entre 0,5 et 3 pce, sont par exemple des alkylalkoxysilanes, notamment des alkyltriéthoxysilanes, comme le 1-octyl-triéthoxysilane commercialisé par la société Degussa-Hüls sous la dénomination Dynasylan Octeo ou le 1-hexadécyl-triéthoxysilane commercialisé par la société Degussa-Hüls sous la dénomination Si216, des polyols, des polyéthers (par exemple des polyéthylène glycols), des amines primaires, secondaires ou tertiaires (par exemple des trialcanolamines), des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes).

## II.5 Préparation des compositions de caoutchouc et bandes de roulement

Les compositions élastomériques pour pneumatique sont fabriquées dans des mélangeurs appropriés, en utilisant deux phases de préparation successives bien connues de l'homme du métier : une première phase de travail ou malaxage thermomécanique (parfois qualifiée de phase "non-productive") à haute température, jusqu'à une température maximale (notée Tmax) comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le système de réticulation ou vulcanisation de base ; de telles phases ont été décrites par exemple dans les demandes EP 501 227, EP 735 088, WO00/05300 ou WO00/05301 précitées.

Le procédé de fabrication des compositions selon l'invention est caractérisé en ce qu'au moins la silice utilisée dans l'invention (associée ou non à une autre charge inorganique renforçante ou à une charge organique renforçante telle qu'un noir de carbone) et l'agent de couplage sont incorporés par malaxage à l'élastomère diénique au cours de la première phase dite non-productive, c'est-à-dire que l'on introduit dans le mélangeur et que l'on malaxe thermomécaniquement, en une ou plusieurs fois, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge inorganique renforçante et agent de couplage), puis dans un deuxième temps, par exemple après une à deux minutes de malaxage, les éventuels agents de recouvrement ou de mise en oeuvre complémentaires et autres additifs divers, à l'exception du système de réticulation ou vulcanisation ; la densité apparente de la silice selon l'invention étant généralement faible, il peut être avantageux de fractionner son introduction en deux ou plusieurs parties.

Une seconde étape (voire plusieurs) de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion, dans la matrice élastomérique, de la charge inorganique renforçante et de son agent de couplage. La durée totale du malaxage, dans cette phase non-productive, est de préférence comprise entre 2 et 10 minutes.

Après refroidissement du mélange ainsi obtenu, on incorpore alors le système de réticulation ou vulcanisation à basse température, généralement dans un mélangeur externe tel qu'un mélangeur à cylindres ; le tout est alors mélangé (phase productive) pendant quelques minutes, par exemple entre 5 et 15 minutes.

Le système de réticulation ou vulcanisation proprement dit est préférentiellement à base de soufre et d'un accélérateur primaire de vulcanisation, en particulier d'un accélérateur du type sulfénamide. A ce système de vulcanisation de base viennent s'ajouter, incorporés au cours de la première phase non-productive et/ou au cours de la phase productive, divers accélérateurs secondaires ou activateurs de vulcanisation connus tels que oxyde de zinc, acide

stéarique, dérivés guanidiques (en particulier diphénylguanidine), etc. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

En résumé, le procédé pour préparer une composition de caoutchouc diénique pour pneumatique conforme à l'invention comporte les étapes suivantes :

- on incorpore à un élastomère diénique, au cours d'une première étape dite "non-productive" :

  à titre de charge renforçante, au moins une charge inorganique en tout ou partie constituée d'une silice obtenue selon le procédé décrit plus haut et/ou présentant les caractéristiques telles que définies plus haut.
  et un agent de couplage assurant la liaison entre la charge inorganique et l'élastomère diénique;

- on malaxe thermomécaniquement le tout, en une ou plusieurs fois, jusqu'à atteindre une température maximale comprise entre 110°C et 190°C;
- on refroidit l'ensemble à une température inférieure à 100°C;
- on incorpore ensuite, au cours d'une seconde étape dite "productive", un système de réticulation ou vulcanisation;
- on malaxe le tout jusqu'à une température maximale inférieure à 110°C.

La composition finale ainsi obtenue est ensuite calandrée, par exemple sous la forme de plaques (épaisseur de 2 à 3 mm) ou de fines feuilles de caoutchouc pour la mesure de ses propriétés physiques ou mécaniques, notamment pour une caractérisation au laboratoire, ou encore extrudée pour former des profilés de caoutchouc utilisés directement pour la fabrication de semi-finis tels que des bandes de roulement, des nappes sommet, des flancs, des nappes carcasse, des talons, des protecteurs, des chambres à air ou des gommes intérieures étanches pour pneu sans chambre.

La vulcanisation ou cuisson de la composition de caoutchouc, en particulier de la bande de roulement réalisé avec celle-ci ou du pneumatique, est conduite de manière connue à une température préférentiellement comprise entre 130°C et 200°C, de préférence sous pression, pendant un temps suffisant qui peut varier par exemple entre 5 et 90 min en fonction notamment de la température de cuisson, du système de vulcanisation adopté, de la cinétique de vulcanisation de la composition considérée et de la taille du pneumatique.

Les compositions de caoutchouc diénique pour pneumatique précédemment décrites à base de silice sont avantageusement utilisées pour la fabrication de bandes de roulement de pneumatiques. Dans ce cas, elles constituent généralement la totalité de la bande de roulement conforme à l'invention. Mais l'invention s'applique également aux cas où ces compositions de caoutchouc forment une partie seulement d'une bande de roulement du type composite, constituée par exemple de bandes adjacentes transversalement différentes, ou encore de deux couches radialement superposées de constitutions différentes, la partie chargée de silice pouvant constituer par exemple la couche radialement externe de la bande de roulement destinée à entrer en contact avec le sol dès le début du roulage du pneumatique neuf, ou au contraire sa couche radialement interne destinée à entrer en contact avec le sol ultérieurement.

Il va de soi que la présente invention concerne les compositions de caoutchouc, les bandes de roulement et pneumatiques précédemment décrits tant à l'état dit "cru" (i.e., avant cuisson) qu'à l'état dit "cuit" ou vulcanisé (i.e., après vulcanisation).

## III EXEMPLES DE REALISATION DE L'INVENTION

### III.1 Préparation des charges

#### III.1.1 Silice B témoin

La silice B correspond à l'art antérieur de la demande de brevet WO 03/016387, réalisée selon le procédé détaillé dans l'exemple 2 (charge C) de ladite demande dont le texte est inclus ici par référence. La description détaillée du procédé de réalisation de cette silice B est repris ici :

> Dans un réacteur de 2000 litres, on introduit 700 litres d'eau industrielle. Cette solution est portée à 80°C par chauffage par injection directe de vapeur. Sous agitation (95 tr/min), de l'acide sulfurique, de concentration égale à 80g/L, est introduit jusqu'à ce que le pH atteigne une valeur de 4.

On introduit simultanément dans le réacteur pendant 35 minutes une solution de silicate de sodium (de rapport pondéral $SiO_2/N_2O$ égal à 3,52) ayant une concentration de 230 g/L à un débit de 190L/heure et de l'acide sulfurique,

de concentration égale à 80g/L, à un débit régulé de manière à maintenir le pH du milieu réactionnel à une valeur de 4.

Au terme de 35 minutes d'addition simultanée, l'inroduction d'acide est arrêtée tant que le pH n'a pas atteint une valeur égale à 8. Une nouvelle addition simultanée est ensuite réalisée pendant 40 minutes avec un débit de silicate de sodium de 190 L/heure (même silicate de sodium que pour la première addition simultanée) et un débit d'acide sulfurique, de concentration égale à 80 g/L, régulé de manière à maintenir le pH du milieu réactionnel à une valeur de 8.

A l'issue de cette addition simultanée, le milieu réactionnel est amené à un pH de 5,2 par de l'acide sulfurique de concentration égale à 80g/L. Le milieu est mûri pendant 5 minutes à pH 5,2.

La bouillie est filtrée et lavée sous filtre presse (extrait sec du gâteau 22%). Le gâteau obtenu est délité en ajoutant une quantité d'aluminate de sodium correspondant à un rapport pondéral Al/SiO2 de 0,3%. La bouillie résultante est atomisée au moyen d'un atomiseur à buses.

<u>III.1.2 Silice C conforme à l'invention</u>

Dans un réacteur en acier inoxydable de 25 litres, muni d'un système d'agitation par hélices et d'un chauffage par double enveloppe, on introduit :

- 7,2 litres d'eau
- 4050 grammes de silicate de sodium aqueux présentant un rapport pondéral $SiO_2/Na_2O$ égal à 3,45 et ayant une concentration de 235 g/L
- 125 grammes de sulfate de sodium $Na_2SO_4$ (électrolyte).

La concentration en silicate (exprimée en $SiO_2$) dans le pied de cuve est alors de 74 g/L. Le mélange est homogénéisé par agitation et porté à 82 °C. L'ensemble de la réaction est réalisé sous agitation (300 tr/min, agitation hélice).

On introduit dans le mélange de l'acide sulfurique de concentration égale à 80 g/L, à un débit de 80 g/min, jusqu'à ce que le pH du milieu réactionnel atteigne une valeur de 8 (soit 4380 grammes d'acide sulfurique en 55 minutes environ). Après 30 minutes d'ajout d'acide sulfurique, la température du milieu réactionnel est portée à 94 °C.

Une fois l'acidification achevée, on introduit simultanément dans le milieu réactionnel, et ce pendant 30 minutes, une solution de silicate de sodium (de rapport pondéral $SiO_2/Na_2O$ égal à 3,45) ayant une concentration de 235 g/L à un débit de 34 g/min, et de l'acide sulfurique de concentration égale à 80 g/L, à un débit régulé de manière à maintenir le pH du milieu réactionnel à une valeur de 8.

Au terme des 30 minutes d'addition simultanée, on introduit de l'acide sulfurique de concentration égale à 80 g/L, à un débit de 80 g/min, jusqu'à ce que le pH du milieu réactionnel atteigne une valeur de 3 (soit 1288 grammes d'acide sulfurique en 16 minutes environ).

On introduit ensuite simultanément dans le milieu réactionnel, et ce pendant 15 minutes, une solution de silicate de sodium (de rapport pondéral $SiO_2/Na_2O$ égal à 3,45) ayant une concentration de 235 g/L à un débit de 34 g/min, et de l'acide sulfurique de concentration égale à 80 g/L, à un débit régulé de manière à maintenir le pH du milieu réactionnel à une valeur de 3.

Au terme des 15 minutes de cette seconde addition simultanée, on introduit une solution de silicate de sodium, du type décrit ci-avant, à un débit de 34 g/min de manière à remonter le pH du milieu réactionnel à 5,2 (soit 783 grammes de solution de silicate en 23 minutes).

On obtient à l'issue de la réaction une bouillie réactionnelle de silice précipitée qui est maintenue sous agitation, à une température de 94 C, pendant 5 minutes. Après ce mûrissement, la bouillie de silice précipitée est récupérée, par vidange du réacteur.

La bouillie est filtrée et lavée sous vide (extrait sec de 14 % en poids). Le gâteau de filtration obtenu est lavé 4 fois avec 5 litres d'eau. Il est ensuite remis en suspension par délitage mécanique en présence d'eau et d'aluminate de sodium (rapport pondéral $Al/SiO_2$ de 0,3 %). La bouillie résultante (extrait sec de 10 % en poids) est séchée au moyen d'un atomiseur à turbines.

Les caractéristiques de la silice précipitée C obtenue (sous forme de poudre) sont alors les suivantes :

Surface spécifique CTAB : 192 $m^2/g$
Surface spécifique BET : 220 $m^2/g$
Taille médiane d50 d'agrégats : 61 nm
$V_{(d_5 - d_{50})} / V_{(d5 - d100)}$ : 0,73
Mode (porosimétrie Hg) : 14,7 nm
C (SAXS) : 0,350
$D_{50M}$ (après désagglomération aux ultra-sons) : 2,4 $\mu m$
$\alpha$ : 0,045 $\mu m^{-1}.min^{-1}$

$N_{SiOH/nm2}$ : 5,0
pH : 7,3

On constate, notamment par MET, que la silice précipitée C est formée d'agrégats de grosses particules primaires (gpp) de silice, de diamètre médian en nombre de 13,5 nm, à la surface desquels se trouvent des petites particules primaires (ppp) de silice, de diamètre médian en nombre de 3,9 nm.

III.1.3 Silice D conforme à l'invention

Dans un réacteur en acier inoxydable de 2000 litres, muni d'un système d'agitation par hélices et d'un chauffage par double enveloppe, on introduit :

- 593 litres d'eau
- 329 litres de silicate de sodium aqueux présentant un rapport pondéral $SiO_2/Na_2O$ égal à 3,45 et ayant une concentration de 235 g/L
- 13,4 kg de sulfate de sodium $Na_2SO_4$ (électrolyte).

La concentration en silicate (exprimée en $SiO_2$) dans le pied de cuve est alors de 75 g/L.
Le mélange est homogénéisé par agitation et porté à 95 °C. L'ensemble de la réaction est réalisé sous agitation (80 tr/min).
On introduit dans le mélange de l'acide sulfurique de concentration égale à 80 g/L à un débit de 490 L/h pendant 15 minutes, puis à un débit de 1480 L/h jusqu'à ce que le pH du milieu réactionnel atteigne une valeur de 8.
Une fois l'acidification achevée, on introduit simultanément dans le milieu réactionnel, et ce pendant 20 minutes, une solution de silicate de sodium (de rapport pondéral $SiO_2/Na_2O$ égal à 3,45) ayant une concentration de 235 g/L à un débit de 198 L/h, et de l'acide sulfurique de concentration égale à 80 g/L, à un débit régulé de manière à maintenir le pH du milieu réactionnel à une valeur de 8.
Au terme des 20 minutes d'addition simultanée, on introduit de l'acide sulfurique de concentration égale à 80 g/L, à un débit de 400 L/h, jusqu'à ce que le pH du milieu réactionnel atteigne une valeur de 4.
On introduit ensuite simultanément dans le milieu réactionnel, et ce pendant 85 minutes, une solution de silicate de sodium (de rapport pondéral $SiO_2/Na_2O$ égal à 3,45) ayant une concentration de 235 g/L à un débit de 85 L/h, et de l'acide sulfurique de concentration égale à 80 g/L, à un débit régulé de manière à maintenir le pH du milieu réactionnel à une valeur de 4.
Au terme des 85 minutes de cette seconde addition simultanée, on introduit une solution de silicate de sodium, du type décrit ci-avant, à un débit de 97 L/h de manière à remonter le pH du milieu réactionnel à 5,2.
On obtient à l'issue de la réaction une bouillie réactionnelle de silice précipitée qui est maintenue sous agitation, à une température de 95 °C, pendant 5 minutes. Après ce mûrissement, la bouillie de silice précipitée est récupérée, par vidange du réacteur.
La bouillie est filtrée par filtre presse (extrait sec de 25 % en poids). Le gâteau de filtration obtenu est remis en suspension par délitage mécanique en présence d'eau et d'aluminate de sodium (rapport pondéral $Al/SiO_2$ de 0,3 %). La bouillie résultante est ensuite séchée au moyen d'un atomiseur à buses.
Les caractéristiques de la silice précipitée D obtenue (sous forme de billes sensiblement sphériques) sont alors les suivantes :

Surface spécifique CTAB : 151 $m^2/g$
Surface spécifique BET : 189 $m^2/g$
Taille médiane d50 d'agrégats : 78 nm
$V_{(d5 - d50)} / V_{(d5 - d100)}$ : 0,75
Mode (porosimétrie Hg) : 23,0 nm
C (SAXS) : 0,640
$D_{50M}$ (après désagglomération aux ultra-sons) : 2,2 $\mu m$
$\alpha$ : 0,031 $\mu m^{-1}.min^{-1}$
$N_{SiOH/nm2}$ : 4,8
pH : 6,6

On constate, notamment par MET, que la silice précipitée D est formée d'agrégats de grosses particules primaires (gpp) de silice, de diamètre médian en nombre de 18,3 nm, à la surface desquels se trouvent des petites particules primaires (ppp) de silice, de diamètre médian en nombre de 4,3 nm.

III.1.4 Silice E conforme à l'invention

Dans un réacteur en acier inoxydable de 25 litres, muni d'un système d'agitation par hélices et d'un chauffage par double enveloppe, on introduit :

- 7,91 litres d'eau
- 4286 grammes de silicate de sodium aqueux présentant un rapport pondéral $SiO_2/Na_2O$ égal à 3,45 et ayant une concentration de 235 g/L
- 134 grammes de sulfate de sodium $Na_2SO_4$ (électrolyte).

La concentration en silicate (exprimée en $SiO_2$) dans le pied de cuve est alors de 72 g/L.

Le mélange est homogénéisé par agitation et porté à 92 °C. L'ensemble de la réaction est réalisé sous agitation (300 tr/min, agitation hélice).

On introduit dans le mélange de l'acide sulfurique de concentration égale à 80 g/L, à un débit de 146 g/min, jusqu'à ce que le pH du milieu réactionnel atteigne une valeur de 8 (soit 4380 grammes d'acide sulfurique en 30 minutes environ).

Une fois l'acidification achevée, on introduit simultanément dans le milieu réactionnel, et ce pendant 25 minutes, une solution de silicate de sodium (de rapport pondéral $SiO_2/Na_2O$ égal à 3,45) ayant une concentration de 235 g/L à un débit de 32 g/min, et de l'acide sulfurique de concentration égale à 80 g/L, à un débit régulé de manière à maintenir le pH du milieu réactionnel à une valeur de 8.

Au terme des 30 minutes d'addition simultanée, on introduit de l'acide sulfurique de concentration égale à 80 g/L, à un débit de 80 g/min, jusqu'à ce que le pH du milieu réactionnel atteigne une valeur de 4 (soit 418 grammes d'acide sulfurique en 5 minutes environ).

On introduit ensuite simultanément dans le milieu réactionnel, et ce pendant 140 minutes, une solution de silicate de sodium (de rapport pondéral $SiO_2/Na_2O$ égal à 3,45) ayant une concentration de 235 g/L à un débit de 19 g/min, et de l'acide sulfurique de concentration égale à 80 g/L, à un débit régulé de manière à maintenir le pH du milieu réactionnel à une valeur de 4.

Au terme des 140 minutes de cette seconde addition simultanée, on introduit une solution de silicate de sodium, du type décrit ci-avant, à un débit de 19 g/min de manière à remonter le pH du milieu réactionnel à 5,2 (soit 98 grammes de solution de silicate en 5 minutes).

On obtient à l'issue de la réaction une bouillie réactionnelle de silice précipitée qui est maintenue sous agitation, à une température de 94 °C, pendant 5 minutes. Après ce mûrissement, la bouillie de silice précipitée est récupérée, par vidange du réacteur.

La bouillie est filtrée et lavée sous vide (extrait sec de 18% en poids). Le gâteau de filtration obtenu est lavé 4 fois avec 5 litres d'eau. Il est ensuite remis en suspension par délitage mécanique en présence d'eau et d'aluminate de sodium (rapport pondéral $Al/SiO_2$ de 0,3 %). La bouillie résultante (extrait sec de 10 % en poids) est séchée au moyen d'un atomiseur à turbines.

Les caractéristiques de la silice précipitée E obtenue (sous forme de poudre) sont alors les suivantes :

Surface spécifique CTAB : 183 $m^2/g$
Surface spécifique BET : 240 $m^2/g$
Taille médiane d50 d'agrégats : 83 nm
$V_{(d5 - d50)} / V_{(d5 - d100)}$ : 0,81
Mode (porosimétrie Hg) : 20,5 nm
C (SAXS) : 0,466
$D_{50M}$ (après désagglomération aux ultra-sons) : 3,5 $\mu m$
$\alpha$: 0,032 $\mu m^{-1}.min^{-1}$
$N_{SiOH/nm2}$ : 3,9
pH : 6,5

On constate, notamment par MET, que la silice précipitée E est formée d'agrégats de grosses particules primaires (gpp) de silice, de diamètre médian en nombre de 22,0 nm, à la surface desquels se trouvent des petites particules primaires (ppp) de silice, de diamètre médian en nombre de 3,9 nm.

## III.2 Charges utilisées

La charge notée A est une silice hautement dispersible, HD, conventionnelle à haute surface spécifique (BET d'environ 160 $m^2/g$), charge inorganique de référence pour le renforcement des bandes de roulement des "Pneus Verts"

(silice "Zeosil 1165MP" de la société Rhodia).

La charge B est une silice hautement dispersible obtenue selon le procédé décrit dans la demande de brevet WO 03/016387 selon le procédé décrit précédemment.

Les charges C, D et E sont des silices hautement dispersibles obtenues selon le procédé original décrit précédemment et vérifient avantageusement l'ensemble des caractéristiques qui suivent :

Elles sont formées d'agrégats de particules primaires de silice à la surface desquels se trouvent des particules primaires de silice de taille inférieure à celle des particules primaires et elles possèdent :

- une surface spécifique CTAB ($S_{CTAB}$) comprise entre 100 et 250 $m^2/g$,
- une taille médiane d50 d'agrégats, mesurée par granulométrie XDC après désagglomération aux ultra-sons, telle que :

$$d50\ (nm) > (6214 / S_{CTAB}\ (m^2/g)) + 23,$$

- une répartition du volume poreux telle que :

$$V_{(d5 - d50)} / V_{(d5 - d100)} > 0{,}906 - (0{,}0013 \times S_{CTAB}\ (m^2/g)),$$

et

. une distribution de tailles de pores telle que :

Mode (nm) > (4166 / $S_{CTAB}$ ($m^2/g$)) - 9,2.

**III.3 <u>Préparation des compositions</u>**

On procède pour les essais qui suivent de la manière suivante: on introduit dans un mélangeur interne, rempli à 70% et dont la température initiale de cuve est d'environ 60°C, l'élastomère diénique (ou le mélange d'élastomères diéniques, le cas échéant), la charge renforçante, l'agent de couplage, puis, après une à deux minutes de malaxage, les divers autres ingrédients à l'exception du soufre et de l'accélérateur primaire sulfénamide. On conduit alors un travail thermomécanique (phase non-productive) en une ou deux étapes (durée totale du malaxage égale à environ 7 min), jusqu'à atteindre une température maximale de "tombée" d'environ 160-165°C.

On récupère le mélange ainsi obtenu, on le refroidit puis on ajoute soufre et accélérateur sulfénamide sur un mélangeur externe (homo-finisseur) à 30°C, en mélangeant le tout (phase productive) pendant 3 à 4 minutes.

Les compositions sont ensuite soit calandrées sous la forme de plaques (épaisseur de 2 à 3 mm) pour la mesure de leurs propriétés physiques ou mécaniques, soit extrudées directement sous la forme de bandes de roulement de pneumatique.

**<u>III. 4 Essais</u>**

Dans les essais qui suivent, la silice hautement dispersible utilisée (A, B, C, D, ou E) constitue avantageusement la totalité de la charge inorganique renforçante, associée à un faible taux de noir de carbone (moins de 10 pce).

<u>III.4.1 Essai 1</u>

Cet essai a pour but de démontrer les propriétés de caoutchouterie améliorées de plusieurs compositions à base de différentes silices HD conformes à l'invention en comparaison d'une composition élastomérique témoin utilisant une silice HD conventionnelle et d'une composition conforme à l'art antérieur utilisant une silice HD spécifique.

On compare pour cela cinq compositions de caoutchouc diénique (coupage SBR/BR) destinées à la fabrication de bandes de roulement pour pneumatique tourisme :

La composition témoin T-1 contient la silice A,
La composition témoin T-2 contient la silice B,
La composition conforme à l'invention C-1 contient la silice C,

La composition conforme à l'invention C-2 contient la silice D,
La composition conforme à l'invention C-3 contient la silice E.

Le tableau 1 donne la formulation des différentes compositions, les taux étant exprimés en pce, parties pour cent parties en poids d'élastomères.

Tableau 1

| Composition N°: | T-2 | T-2 | C-1 | C-2 | C-3 |
|---|---|---|---|---|---|
| SBR (1) | 70 | 70 | 70 | 70 | 70 |
| BR (2) | 30 | 30 | 30 | 30 | 30 |
| silice A | 80 | - | - | - | - |
| silice B | - | 80 | - | - | - |
| silice C | - | - | 80 | - | - |
| silice D | - | - | - | 80 | - |
| Silice E | - | - | - | - | 80 |
| noir de carbone (3) | 6 | 6 | 6 | 6 | 6 |
| TESPT (4) | 6.40 | 7,20 | 7,02 | 5,52 | 6,77 |
| DPG (5) | 1.50 | 1,91 | 1,95 | 1,59 | 2,11 |
| antioxydant (6) | 1,9 | 1,9 | 1,9 | 1,9 | 1,9 |
| Résine (8) | 15 | 15 | 15 | 15 | 15 |
| Huile (9) | 8 | 8 | 8 | 8 | 8 |
| Soufre | 1,1 | 1,1 | 1,1 | 1,1 | 1,1 |
| accélérateur (10) | 2 | 2 | 2 | 2 | 2 |
| ZnO | 2,5 | 2,5 | 2,5 | 2,5 | 2,5 |
| acide stéarique | 2 | 2 | 2 | 2 | 2 |

(1) SSBR avec 58% de motifs polybutadiène 1-2 ; 25% de styrène ; Tg = -30°C
(2) BR (avec 4,3 % de 1-2 ; 2,7% de trans); 93% de cis 1-4 (Tg = -103°C);
(3) noir de carbone N234;
(4) TESPT ("Si69" de la société Degussa);
(5) diphénylguanidine ("Vulcacit D" de la société Bayer);
(6) N-1,3-diméthylbutyl-N-phényl-para-phénylènediamine ("Santoflex 6-PPD" de la société Flexsys);
(8) résine THER 9872 commercialisée par la société DRT
(9) MES/HPD commercialisée par la société Total
(10) N-cyclohexyl-2-benzothiazyl-sulfénamide (société Flexsys: "Santocure" CBS).

Les propriétés mesurées avant et après cuisson à 150°C pendant 40 minutes sont reportées dans le tableau 2 qui suit.

Tableau 2

| Composition N°: | T-1 | T-2 | C-1 | C-2 | C-3 |
|---|---|---|---|---|---|
| Propriétés avant cuisson: | | | | | |
| ML (1+4) | 95 | 124 | 102 | 90 | 98 |
| BR (%) | 67 | 80 | 69 | 66 | 65 |
| Propriétés après cuisson: | | | | | |
| MA300/MA100 | 1,2 | 1,1 | 1,2 | 1,3 | 1,3 |
| $\Delta G^*$ | 5,52 | 5,57 | 3,66 | 1,88 | 2,10 |
| $\tan(\delta)$max | 0,335 | 0,333 | 0,304 | 0,251 | 0,248 |

La figure 3 reproduit les courbes du couple rhéométrique en fonction du temps permettant de suivre la réaction de vulcanisation des différentes compositions. Ces courbes sont notées C1, C2, C3, T1 et T2 et elles correspondent respectivement auw compositions C-1, C-2, C-3, T-1 et T-2.

Les résultats du tableau 2 montrent, pour les compositions selon l'invention C-1, C-2 et C-3 comparées aux compositions témoin T-1 et T-2 :

- une viscosité Mooney très proches pour les compositions T-1, C-1, C-2 et C-3, (la viscosité Mooney de la composition témoin T-2 est dégradée),
- un taux de couplage charge/élastomère très proches pour les compositions selon l'invention, comparable à celui de la composition témoin T-1 (illustré par la valeur Bound Rubber BR), la composition témoin T-2 ayant une valeur supérieure de Bound Rubber,
- des propriétés de renforcement (MA300/MA100) pour les compositions conformes à l'invention C-1, C-2 et C-3, équivalentes ou améliorées par rapport à celles des compositions témoins T-1 et T-2, ce qui démontre un niveau de renforcement satisfaisant voire amélioré par rapport à ces compositions témoins,
- enfin on constate des propriétés hystérétiques ($\Delta G^*$, tan($\delta$)max) très significativement améliorées par rapport aux deux compositions témoins, synonyme d'un résistance au roulement fortement réduite avec les compositions conformes à l'invention C-1, C-2 et C-3 par rapport aux témoins.

De plus, la figure 3 annexée confirme l'obtention de compositions dont la rhéométrie est comparable : démarrage de la réaction de vulcanisation à un t0 proche pour les différentes compositions, une cinétique également comparable (correspondant à la pente entre le t0 et l'atteinte du palier de la vulcanisation).

Il apparaît ainsi clairement que les compositions conformes à l'invention C-1 et C-2 présentent des propriétés hystérétiques fortement améliorées par rapport aux compositions témoins et ceci avec les autres propriétés de caoutchouterie, à cru et à cuit, équivalentes aux témoins. Ce qui constitue un très bon compromis hystérèse/renforcement particulièrement intéressant pour un homme du métier.

III.4.2 Essai 2

Cet essai a pour but de démontrer les performances améliorées de plusieurs compositions élastomériques à base de silice HD selon l'invention, comparée à une composition témoin utilisant une silice HD conventionnelle pour bande de roulement de « Pneu Vert ».

En effet il s'agit ici de conforter les résultats de caoutchouterie précédents lors de tests réels réalisés avec des pneumatiques dont les bandes de roulement ont été réalisées respectivement à partir d'une composition témoin T-3 utilisant une silice HD conventionnelle (la silice A) et à partir d'une composition C-4 conforme à l'invention utilisant une silice conforme à l'invention (la silice D) qui a été préparée selon le mode préparatoire explicité dans le paragraphe III.1.3.

Le tableau 3 donne la formulation des compositions T-3 et C-4, les taux étant exprimés en pce, parties pour cent parties en poids d'élastomères.

Tableau 3

| Composition N°: | T-3 | C-4 |
|---|---|---|
| SBR (1) | 72 | 72 |
| BR (2) | 28 | 28 |
| silice A | 82 | - |
| silice D | - | 82 |
| noir de carbone (3) | 4 | 4 |
| TESPT (4) | 6.56 | 6,21 |
| DPG (5) | 1.54 | 1,79 |
| antioxydant (6) | 2.0 | 2.0 |
| Cire ozone (7) | 1,5 | 1,5 |
| Résine (8) | 20 | 20 |
| Huile (9) | 12 | 12 |
| Soufre | 1,1 | 1,1 |
| accélérateur (10) | 1,9 | 1,9 |
| ZnO | 2 | 2 |

(suite)

| Composition N°: | T-3 | C-4 |
|---|---|---|
| acide stéarique | 1,5 | 1,5 |

(1) SSBR avec 58% de motifs polybutadiène 1-2 ; 25% de styrène ; Tg = -30°C 72 pce SBR sec étendu avec 18% en poids d'huile;
(2) BR (avec 4,3 % de 1-2 ; 2,7% de trans); 93% de cis 1-4 (Tg = -103°C);
(3) noir de carbone N234;
(4) TESPT ("Si69" de la société Degussa);
(5) diphénylguanidine ("Vulcacit D" de la société Bayer);
(6) N-1,3-diméthylbutyl-N-phényl-paraphénylènediamine ("Santoflex 6-PPD" de la société Flexsys);
(7) mélange de cires anti-ozone macro- et micro-cristallines
(8) résine THER 9872
(9) MES/HPD
(10) N-cyclohexyl-2-benzothiazyl-sulfénamide (société Flexsys: "Santocure" CBS).

Les propriétés hystérétiques mesurées après cuisson à 150°C pendant 40 minutes sont portées dans le tableau 4 qui suit.

Tableau 4

| Composition N°: | T-3 | C-4 |
|---|---|---|
| $\Delta G^*$ | 6,62 | 2,32 |
| tan($\delta$)max | 0,366 | 0,267 |

Les résultats obtenus dans le tableau 4 ont pour objet de remettre en évidence l'amélioration très significatives des propriétés hystérétiques obtenues avec la composition conforme à l'invention C-4 par rapport à la composition témoin T-3.

Les compositions T-3 et C-4 sont utilisées comme bandes de roulement pour pneumatique tourisme à carcasse radiale, de dimension 195/65R15 91H, conventionnellement fabriqués.

Les pneumatiques ainsi réalisés $P_{(T3)}$ et $P_{(C4)}$, utilisant respectivement une bande de roulement ayant la composition T-3 et C-4, sont d'abord testés sur un volant conformément au test de résistance au roulement décrit dans le paragraphe 1.3.1 puis montés sur un véhicule PEUGEOT 406 2L HDI afin de tester leur résistance à l'usure comme décrit au paragraphe 1.3.2 et leur adhérence sur sol sec et sol mouillé comme décrit au paragraphe 1.3.3.

Les performances des pneumatiques réalisées réalisés $P_{(T3)}$ et $P_{(C4)}$, sont reportées dans le tableau 5 qui suit.

Tableau 5

| Pneumatique: | $P_{(T3)}$ | $P_{(C4)}$ |
|---|---|---|
| Résistance au roulement | 100 | 117 |
| Adhérence sol sec | 100 | 98 |
| Adhérence sol mouillé | 100 | 107 |
| usure | 100 | 97 |

Il apparaît de façon très claire que le pneumatique **$P_{(C4)}$** conforme à l'invention présent des performances très nettement améliorées en résistance au roulement sans dégradation de l'adhérence sur sol sec ni du compromis adhérence sur sol mouillé/résistance à l'usure, par rapport au pneumatique témoin **P**$_{(T3)}$ ce qui constitue un résultat étonnant et remarquable.

## Revendications

1. Composition de caoutchouc diénique pour pneumatique à base d'au moins (i) un élastomère diénique, (ii) une charge inorganique renforçante, (iii) un agent de couplage assurant la liaison entre la charge inorganique et l'élastomère, **caractérisée en ce que** ladite charge inorganique comprend au moins une silice formée d'agrégats de particules primaires (A) de silice à la surface desquels se trouvent des particules primaires (B) de silice de taille inférieure à celle des particules primaires (A) et **en ce qu'**elle possède :

   - une surface spécifique CTAB (SCTAB) comprise entre 60 et 400 m2/g,
   - une taille médiane d50 d'agrégats, mesurée par granulométrie XDC après désagglomération aux ultra-sons, telle que :

   $$d50\ (nm) > (6214 / SCTAB\ (m2/g)) + 23,$$

   - une répartition du volume poreux telle que :

   $$V(d5 - d50) / V(d5 - d100) > 0,906 - (0,0013 \times SCTAB\ (m2/g)),$$

   et

   . une distribution de tailles de pores telle que :

   $$Mode\ (nm) > (4166 / SCTAB\ (m2/g)) - 9,2.$$

2. Composition selon la revendication 1, dans laquelle la silice présente un paramètre C, mesuré par diffusion de rayons X aux petits angles (SAXS), tel que : C / $S_{CTAB}$ ($m^2/g$) > 0,001.

3. Composition selon l'une des revendications 1 ou 2, dans laquelle la silice est formée d'agrégats de grosses particules primaires de silice à la surface desquels se trouvent des petites particules primaires de silice, le diamètre médian en nombre des grosses particules primaires étant d'au moins 12 nm et le diamètre médian en nombre des petites particules primaires étant compris entre 2 et 8 nm.

4. Composition selon l'une quelconque des revendications 1 à 3, dans laquelle la répartition du volume poreux de la silice est telle que $V_{(d5 - d50)} / V_{(d5 - d100)} > 0,71$.

5. Composition selon l'une quelconque des revendications 1 à 4, dans laquelle la silice possède une surface spécifique CTAB ($S_{CTAB}$) comprise entre 80 et 300 $m^2/g$, en particulier entre 100 et 250 $m^2/g$, notamment entre 130 et 230 $m^2/g$.

6. Composition selon l'une quelconque des revendications 1 à 5, dans laquelle la silice possède une surface spécifique BET ($S_{BET}$) comprise entre 60 et 500 $m^2/g$, en particulier entre 90 et 380 $m^2/g$, notamment entre 130 et 300 $m^2/g$.

7. Composition selon l'une quelconque des revendications 1 à 6, dans laquelle la silice présente une surface spécifique CTAB ($S_{CTAB}$) et une surface spécifique BET ($S_{BET}$) telles que le rapport $S_{BET}$ / $S_{CTAB}$ est compris entre 1,0 et 1,5, de préférence entre 1,1 et 1,4, en particulier entre 1,15 et 1,35.

8. Composition selon l'une quelconque des revendications 1 à 7, dans laquelle la silice présente un diamètre médian ($D_{50M}$), après désagglomération aux ultra-sons, inférieur à 6,0 $\mu$m, en particulier inférieur à 5,0 $\mu$m, notamment inférieur à 4,0 $\mu$m

9. Composition selon l'une quelconque des revendications 1 à 8, qui comprend une autre charge inorganique renforçante.

**10.** Composition selon l'une quelconque des revendications 1 à 9, qui comprend une charge organique renforçante.

**11.** Composition selon l'une quelconque des revendications 9 ou 10, dans laquelle le taux de silice représente de 1 à 99 % en poids de la charge renforçante totale.

**12.** Composition selon la revendication 11, dans laquelle le taux de silice est supérieur ou égal à 20% en poids de la charge renforçante totale.

**13.** Composition selon la revendication 12, dans laquelle le taux de silice est supérieur ou égal à 50% en poids de la charge renforçante totale, de préférence à 80% en poids de la charge renforçante totale.

**14.** Procédé de préparation d'une composition de caoutchouc diénique pour pneumatique à base d'au moins un élastomère diénique, une charge inorganique renforçante, un agent de couplage assurant la liaison entre la charge inorganique et l'élastomère, comprenant les étapes suivantes:

- on incorpore à un élastomère diénique, au cours d'une première étape dite "non-productive" :

  une charge renforçante;
  et un agent de couplage assurant la liaison entre la charge inorganique et l'élastomère diénique;

- on malaxe thermomécaniquement le tout, en une ou plusieurs fois, jusqu'à atteindre une température maximale comprise entre 110°C et 190°C;
- on refroidit l'ensemble à une température inférieure à 100°C;
- on incorpore ensuite, au cours d'une seconde étape dite "productive", un système de réticulation ou vulcanisation;
- on malaxe le tout jusqu'à une température maximale inférieure à 110°C,

ledit procédé **caractérisé en ce que**, à titre de charge renforçante, on incorpore une charge inorganique constituée en tout ou partie d'une silice telle que définie dans l'une quelconque des revendications 1 à 13.

**15.** Article semi-fini en caoutchouc pour pneumatique à base d'une composition de caoutchouc diénique selon l'une quelconque des revendications 1 à 13.

**16.** Pneumatique incorporant un article semi-fini en caoutchouc tel que défini dans la revendication 15.

**17.** Bande de roulement de pneumatique à base d'une composition de caoutchouc selon l'une quelconque des revendications 1 à 13.

**18.** Pneumatique incorporant une bande de roulement tel que défini dans la revendication 17.

## Patentansprüche

**1.** Dienkautschukzusammensetzung für Reifen auf Basis von mindestens (i) einem Dienelastomer, (ii) einem verstärkenden anorganischen Füllstoff und (iii) einem Kupplungsmittel, das die Bindung zwischen dem anorganischen Füllstoff und dem Elastomer gewährleistet, **dadurch gekennzeichnet, dass** der anorganischen Füllstoff mindestens ein Siliciumdioxid aus Aggregaten von Siliciumdioxid-Primärteilchen (A), an deren Oberfläche Siliciumdioxid-Primärteilchen (B) mit kleinerer Größe als die Primärteilchen (A) vorliegen, umfasst und

- eine spezifische CTAB-Oberfläche (SCTAB) zwischen 60 und 400 $m^2/g$,
- eine solche mittlere Aggregatgröße d50, gemessen durch XDC-Teilchengrößenbestimmung nach Ultraschall-Desagglomerierung, dass:

$$d50\ (nm) > (6214 / SCTAB\ (m^2/g)) + 23,$$

- eine solche Porenvolumenverteilung, dass:

$$V(d5\text{-}d50) / V(d5\text{-}d100) > 0{,}906 - (0{,}0013 \times SCTAB (m^2/g))$$

und
- eine solche Porengrößenverteilung, dass:

$$Modus (nm) > (4166 / SCTAB (m^2/g)) - 9{,}2$$

besitzt.

2. Zusammensetzung nach Anspruch 1, wobei das Siliciumdioxid einen solchen Parameter C, gemessen durch Röntgenkleinwinkelstreuung (SAXS), aufweist, dass: C / $S_{CTAB}$ ($m^2$/g) > 0,001.

3. Zusammensetzung nach Anspruch 1 oder 2, **dadurch gekennzeichnet, dass** das Siliciumdioxid Aggregate von großen Siliciumdioxid-Primärteilchen, an deren Oberfläche kleine Siliciumdioxid-Primärteilchen vorliegen, bildet, wobei der zahlenmittlere Durchmesser der großen Primärteilchen mindestens 12 nm beträgt und der zahlenmittlere Durchmesser der kleinen Primärteilchen zwischen 2 und 8 nm liegt.

4. Zusammensetzung nach einem der Ansprüche 1 bis 3, wobei die Porenvolumenverteilung des Siliciumdioxids derart ist, dass:

$$V_{(d5-d50)} / V_{(d5-d100)} > 0{,}71.$$

5. Zusammensetzung nach einem der Ansprüche 1 bis 4, wobei das Siliciumdioxid eine spezifische CTAB-Oberfläche ($S_{CTAB}$) zwischen 80 und 300 $m^2$/g, insbesondere zwischen 100 und 250 $m^2$/g und speziell zwischen 130 und 230 $m^2$/g besitzt.

6. Zusammensetzung nach einem der Ansprüche 1 bis 5, bei dem das Siliciumdioxid eine spezifische BET-Oberfläche ($S_{BET}$) zwischen 60 und 500 $m^2$/g, insbesondere zwischen 90 und 380 $m^2$/g und speziell zwischen 130 und 300 $m^2$/g besitzt.

7. Zusammensetzung nach einem der Ansprüche 1 bis 6, bei dem das Siliciumdioxid eine solche spezifische CTAB-Oberfläche ($S_{CTAB}$) und eine solche spezifische BET-Oberfläche ($S_{BET}$) aufweist, das das Verhältnis $S_{BET}$ / $S_{CTAB}$ zwischen 1,0 und 1,5, vorzugsweise zwischen 1,1 und 1,4 und insbesondere zwischen 1,15 und 1,35 liegt.

8. Zusammensetzung nach einem der Ansprüche 1 bis 7, wobei das Siliciumdioxid nach Ultraschall-Desagglomerierung einen mittleren Durchmesser ($D_{50M}$) von weniger als 6,0 $\mu$m, insbesondere weniger als 5,0 $\mu$m und speziell weniger als 4,0 $\mu$m aufweist.

9. Zusammensetzung nach einem der Ansprüche 1 bis 8, die einen weiteren verstärkenden anorganischen Füllstoff umfasst.

10. Zusammensetzung nach einem der Ansprüche 1 bis 9, die einen verstärkenden organischen Füllstoff umfasst.

11. Zusammensetzung nach Anspruch 9 oder 10, wobei der Siliciumdioxidgehalt 1 bis 99 Gew.-% des gesamten verstärkenden Füllstoffs ausmacht.

12. Zusammensetzung nach Anspruch 11, wobei der Siliciumdioxidgehalt größer gleich 20 Gew.-% des gesamten verstärkenden Füllstoffs ist.

13. Zusammensetzung nach Anspruch 12, wobei der Siliciumdioxidgehalt größer gleich 50 Gew.-% des gesamten

verstärkenden Füllstoffs und vorzugsweise 80 Gew.-% des gesamten verstärkenden Füllstoffs ist.

**14.** Verfahren zur Herstellung einer Dienkautschukzusammensetzung für Reifen auf Basis von mindestens einem Dienelastomer, einem verstärkenden anorganischen Füllstoff und einem Kupplungsmittel, das die Bindung zwischen dem anorganischen Füllstoff und dem Elastomer gewährleistet, bei dem man:

- im Lauf eines ersten, als "nichtproduktiv" bezeichneten Schritts in ein Dienelastomer einen verstärkenden Füllstoff

und ein Kupplungsmittel, das die Bindung zwischen dem anorganischen Füllstoff und dem Dienelastomer gewährleistet, einarbeitet,

- das Ganze ein- oder mehrmals thermomechanisch knetet, bis eine Höchsttemperatur zwischen 110°C und 190°C erreicht ist,
- das Ganze auf eine Temperatur von weniger als 100°C abkühlt;
- dann im Lauf eines zweiten, als "produktiv" bezeichneten Schritts das Vernetzungs- oder Vulkanisationssystem einarbeitet;
- das Ganze bis zu einer Höchsttemperatur von weniger als 110°C knetet,

wobei das Verfahren **dadurch gekennzeichnet ist, dass** man als verstärkenden Füllstoff einen anorganischen Füllstoff, der ganz oder teilweise aus einem Siliciumdioxid gemäß einem der Ansprüche 1 bis 13 besteht, einarbeitet.

**15.** Kautschuk-Halbzeug für Reifen auf Basis einer Dienkautschukzusammensetzung nach einem der Ansprüche 1 bis 13.

**16.** Reifen mit einem Kautschuk-Halbzeug gemäß Anspruch 15.

**17.** Reifenlauffläche auf Basis einer Kautschukzusammensetzung nach einem der Ansprüche 1 bis 13.

**18.** Reifen mit einer Lauffläche gemäß Anspruch 17.

## Claims

**1.** Diene rubber composition for tyres based on at least (i) one diene elastomer, (ii) one reinforcing inorganic filler and (iii) one coupling agent which provides the bonding between the reinforcing filler and the elastomer, **characterized in that** the said inorganic filler comprises at least one silica formed of aggregates of primary particles (A) of silica, at the surface of which occur primary particles (B) of silica with a size smaller than that of the primary particles (A), and **in that** it has:

- a CTAB specific surface ($S_{CTAB}$) of between 60 and 400 $m^2/g$,
- a d50 median size of aggregates, measured by XDC particle sizing after ultrasonic deagglomeration, such that:

$$d50\ (nm) > (6214 / S_{CTAB}\ (m^2/g)) + 23,$$

- a pore volume distribution such that:

$$V(d5 - d50) / V(d5 - d100) > 0.906 - (0.0013 \times S_{CTAB}\ (m^2/g)),$$

and

. a pore size distribution such that:

$$Mode\ (nm) > (4166/S_{CTAB}\ (m^2/g)) - 9.2.$$

**2.** Composition according to Claim 1, in which the silica exhibits a parameter C, measured by small angle X-ray scattering (SAXS), such that: $C/S_{CTAB}$ ($m^2/g$) > 0.001.

**3.** Composition according to either of Claims 1 and 2, in which the silica is formed of aggregates of large silica primary particles, at the surface of which occur small silica primary particles, the number median diameter of the large primary particles being at least 12 nm and the number median diameter of the small primary particles being between 2 and 8 nm.

**4.** Composition according to any one of Claims 1 to 3, in which the pore volume distribution of the silica is such that $V_{(d5 - d50)} / V_{(d5 - d100)} > 0.71$.

**5.** Composition according to any of Claims 1 to 4, in which the silica has a CTAB specific surface ($S_{CTAB}$) of between 80 and 300 $m^2/g$, in particular between 100 and 250 $m^2/g$, especially between 130 and 230 $m^2/g$.

**6.** Composition according to any one of Claims 1 to 5, in which the silica has a BET specific surface ($S_{BET}$) of between 60 and 500 $m^2/g$, in particular between 90 and 380 $m^2/g$, especially between 130 and 300 $m^2/g$.

**7.** Composition according to any one of Claims 1 to 6, in which the silica exhibits a CTAB specific surface ($S_{CTAB}$) and a BET specific surface ($S_{BET}$) such that the $S_{BET}/S_{CTAB}$ ratio is between 1.0 and 1.5, preferably between 1.1 and 1.4, in particular between 1.15 and 1.35.

**8.** Composition according to any one of Claims 1 to 7, in which the silica exhibits a median diameter ($D_{50M}$), after ultrasonic deagglomeration, of less than 6.0 $\mu$m, in particular of less than 5.0 $\mu$m, especially of less than 4.0 $\mu$m

**9.** Composition according to any one of Claims 1 to 8, which comprises another reinforcing inorganic filler.

**10.** Composition according to any one of Claims 1 to 9, which comprises a reinforcing organic filler.

**11.** Composition according to either one of Claims 9 and 10, in which the level of silica represents from 1 to 99% by weight of the total reinforcing filler.

**12.** Composition according to Claim 11, in which the level of silica is greater than or equal to 20% by weight of the total reinforcing filler.

**13.** Composition according to Claim 12, in which the level of silica is greater than or equal to 50% by weight of the total reinforcing filler, preferably greater than or equal to 80% by weight of the total reinforcing filler.

**14.** Process for the preparation of a diene rubber composition for a tyre based on at least one diene elastomer, one reinforcing inorganic filler and one coupling agent which provides the bonding between the inorganic filler and the elastomer, comprising the following stages:

- the following are incorporated in a diene elastomer during a first "non-productive" stage:

  a reinforcing filler;
  and a coupling agent which provides the bonding between the inorganic filler and the diene elastomer;

- the combined mixture is kneaded thermomechanically, in a single stage or several stages, until a maximum temperature of between 110°C and 190°C is reached;
- the combination is cooled to a temperature of less than 100°C;
- a crosslinking or vulcanizing system is subsequently incorporated during a second "productive" stage;

  - the combined mixture is kneaded up to a maximum temperature of less than 110°C, the said process being **characterized in that** an inorganic filler composed, in all or part, of a silica as defined in any one of Claims 1 to 13 is incorporated as reinforcing filler.

**15.** Semi-finished article made of rubber for a tyre based on a diene rubber composition according to any one of Claims 1 to 13.

**16.** Tyre incorporating a semi-finished article made of rubber as defined in Claim 15.

**17.** Tyre tread based on a rubber composition according to any one of Claims 1 to 13.

**18.** Tyre incorporating a tread as defined in Claim 17.

Figure 1

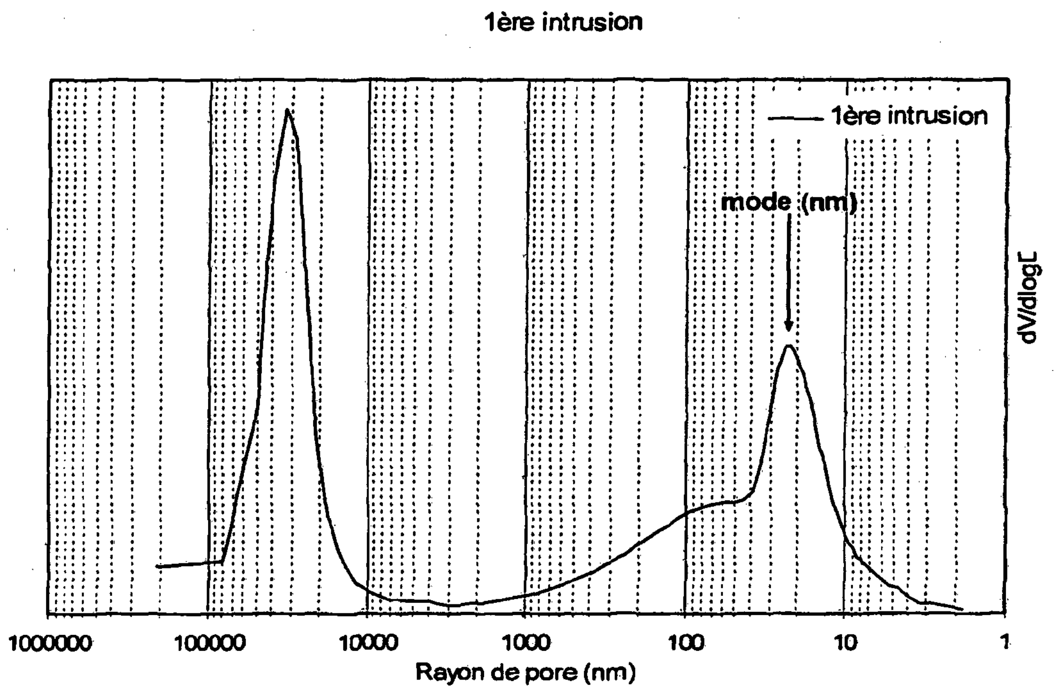
1ère intrusion
1ère intrusion
mode (nm)
dV/dlogL
1000000
100000
10000
1000
100
10
1
Rayon de pore (nm)

Figure 2

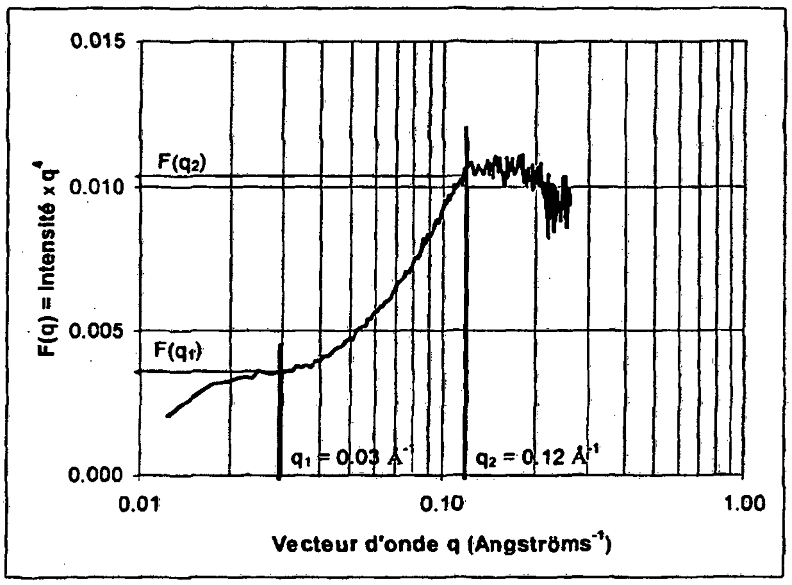
0.015
0.010
0.005
0.000
F(q2)
F(q1)
F(q) = Intensité x q4
q1 = 0.03 Å-1
q2 = 0.12 Å-1
0.01
0.10
1.00
Vecteur d'onde q (Angströms-1)

Figure 3

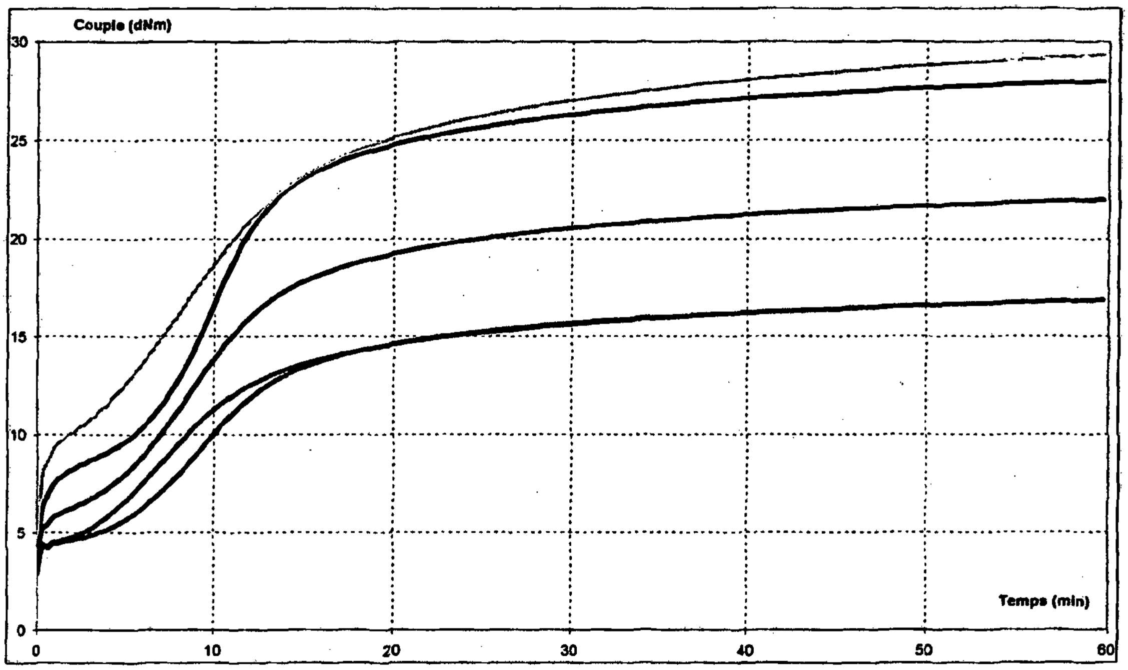

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 501227 A
- EP 692492 A
- EP 692493 A
- EP 735088 A
- EP 767206 A
- EP 786493 A
- EP 881252 A
- WO 9902590 A
- WO 9902601 A
- WO 9902602 A
- WO 9906480 A
- WO 0005300 A
- WO 0005301 A
- WO 03016387 A
- WO 9928376 A
- WO 9928380 A
- WO 0073372 A
- WO 0073373 A
- FR 2740778
- US 6013718 A
- FR 2765882
- US 5977238 A
- WO 0192402 A
- US 6815473 B
- WO 2004096865 A
- US 20060089445 A
- EP 1127909 A
- US 6503973 B
- EP 0735088 A
- EP 0810258 A
- WO 02053634 A
- WO 2004003067 A
- WO 2004056915 A
- WO 9736724 A
- WO 9916600 A
- WO 2006069792 A
- WO 2006069793 A
- US 3842111 A
- US 3873489 A
- US 3978103 A
- US 3997581 A
- US 4002594 A
- US 4072701 A
- US 4129585 A
- US 5580919 A
- US 5583245 A
- US 5650457 A
- US 5663358 A
- US 5663395 A
- US 5663396 A
- US 5674932 A
- US 5675014 A
- US 5684171 A
- US 5684172 A
- US 5696197 A
- US 5708053 A
- US 5892085 A
- WO 02083782 A
- WO 0196442 A
- WO 0230939 A
- WO 0231041 A
- WO 2006125532 A
- WO 2006125533 A
- WO 2006125534 A
- WO 2005087859 A
- WO 2006061064 A
- WO 2007017060 A


### Littérature non-brevet citée dans la description


- *The journal of the American Chemical Society,* Février 1938, vol. 60, 309
- **GUINIER A. ; FOURNET G.** Small Angle Scattering of X rays. Wiley, 1955
- **GLATTER O. ; KRATTKY O.** Small Angle X Ray Scattering. Academic Press, 1982
- **SPALLA O. ; LYONNARD S. ; TESTARD F.** Analysis of the Small-Angle Intensity Scattered by a Porous and Granular Medium. *J. Appl. Cryst.,* 2003, vol. 36, 338-347
- *Plastics, Rubber and Composites Processing and Applications,* 1996, vol. 25 (7), 327
- *Rubber Chemistry and Technology,* 1996, vol. 69, 325